# EUROPÄISCHE PATENTSCHRIFT

(11) **EP 1 548 603 B1**
(45) Veröffentlichungstag und Bekanntmachung des Hinweises auf die Patenterteilung: **26.11.2008**
(21) Anmeldenummer: 04029118.9
(22) Anmeldetag: 08.12.2004
(51) Int. Cl.: G06F 13/16

(54) **Verfahren und Vorrichtung zum Steuern eines Speicherzugriffs**
Method and apparatus for controlling memory access
Procede et dispositif de controle d'access memoire

(30) Priorität: 22.12.2003 DE 10361059
(43) Veröffentlichungstag der Anmeldung: 29.06.2005
(73) Patentinhaber: Micronas GmbH, 79108 Freiburg i. Br. (DE)
(72) Erfinder: Franke, Jörg, 79117 Freiburg (DE)
(74) Vertreter: Göhring, Robert

(56) Entgegenhaltungen:
- US-A- 5 649 161
- US-A- 5 696 917
- US-A1- 2002 032 829
- US-A1- 2002 188 820

## Beschreibung

Die Erfindung bezieht sich auf ein Verfahren zum Steuern eines Speicherzugriffs mit den oberbegrifflichen Merkmalen des Patentanspruchs 1 bzw. auf eine Vorrichtung zum Steuern eines Speicherzugriffs mit den oberbegrifflichen Merkmalen des Patentanspruchs 14.

Computer, beispielsweise ein sogenannter embedded Controller oder auch ein handelsüblicher Personalcomputer (PC), weisen für Steuerzwecke eine zentrale Steuereinrichtung (CPU) auf. Dieser Steuereinrichtung sind zum zeitweiligen oder dauerhaften Speichern von Daten, worunter auch Steuerprogramme oder im weitesten Sinne Signalisierungen zu verstehen sind, Speichereinrichtungen zugeordnet. Die Speichereinrichtungen können als interner Bestandteil des Computers oder als externe Einrichtung ausgebildet sein. Insbesondere können die Speichereinrichtungen auf einer Schaltungsplatine angeordnet sein, auf welcher die zentrale Steuereinrichtung angeordnet ist. Die Verbindung der zentralen Steuereinrichtung mit einer oder mehreren Speichereinrichtungen erfolgt vorzugsweise über Busse, insbesondere einen Adressbus zum Übertragen von Adressen bzw. Adressdaten und einen Datenbus zum Übertragen von Anwendungs-und Nutzdaten.

Allgemein bekannt sind Speicher-Managementeinrichtungen, welche zwischen die zentrale Steuereinrichtung oder einen dieser zugeordneten Cash-Direktzugriffsspeicher (CRAM) einerseits und andererseits einen dynamischen Direktzugriffsspeicher (DRAM) geschaltet sind, um die zentrale Steuereinrichtung hinsichtlich des Aufwands beim Steuern eines Speicherzugriffs zu entlasten. Für einen Speicherzugriff auf beispielsweise einen Flash-Speicher gibt es verschiedene Zugriffsarten. Im Falle eines zufälligen (RANDOM) Zugriffs ist jeder Speicherzugriff gleich langsam. Im Fall eines Seitenzugriffs (Page Mode) findet eine Verifikation innerhalb einer Seite (Page) unabhängig von der Reihenfolge der Adressen statt. Im Fall eines sogenannten Burst-Modus (Datenblockzugriffs-Betriebsart) wird in einer bestimmten Adress-Reihenfolge auf einen Datenbereich des Speichers zugegriffen. Ein besonderes Problem stellen die je nach Zugriffsart und je nach verwendetem Speichertyp, auf den zugegriffen werden soll, unterschiedlichen Wartezeiten bzw. Wartezustände dar, welche von der zentralen Steuereinrichtung in Verbindung mit Speicherzugriffen auf die jeweiligen Speicher zu berücksichtigen sind.

Allgemein bekannt sind Speicher-Steuereinrichtungen, welche neben einem einfachen zufälligen Zugriff auch Page- und Burst-Modus-Zugriffe auf statische Speicher, wie beispielsweise ROM, Flash oder SRAM, unterstützen und dabei auch je nach Zugriffsart und verwendetem Speichertyp unterschiedliche Wartezeiten einfügen, wie beispielsweise der ARM Prime Cell Synchronous Static Memory Controller.

Nachteilhafterweise werden nur die sequenziellen Zugriffe, d. h. Speicherzugriffe innerhalb einer Seite oder eines Burst schnell ausgeführt. Alle nicht sequenziellen Zugriffe benötigen zusätzliche Wartezustände, beispielsweise 2 - 3 Takte als Wartetakte, und zwar unabhängig von der möglichen Zugriffsgeschwindigkeit auf den Speicher. Weiterhin nachteilhaft ist, dass keine weiteren Optimierungen vorgesehen sind, um den Anteil der sequenziellen Zugriffe zu erhöhen. Außerdem ist keine Ausnutzung von sogenannten "Merged IS Cycles" vorgesehen, bei denen die zentrale Steuereinrichtung bei einem internen Zyklus ohne Speicherzugriff bereits auf die Adresse für den nächsten Speicherzugriff zeigt, bzw. bei der die SpeicherSteuereinrichtung schon selbst die nächste sinnvolle Adresse am Speicher anlegt. Ebenfalls nachteilhaft ist, dass keine Verbessung der Leistungsfähigkeit bei von der CPU angeforderten schmaleren Zugriffen auf einen breiten Speicher möglich ist, beispielsweise ein 16-Bit-Zugriff auf einen 32-Bit breiten Speicher.

US2002/0032829 offenbart das Steuern eines Speicherzugriffs derart, dass für eine zentrale Steuereinrichtung, welche auf die Speichereinrichtung zugreift, die Anzahl der Wartezustände abhängig von der Art der zuzugreifenden Speichereinrichtung festgelegt wird.

US5696917 offenbart das Untersuchen, ob die aktuelle Speicheradresse und die vorhergehende Speicheradresse während eines Burst-Zugriffs auf die gleiche Seite zeigen und, falls dies zutrifft, kein Wartezyklus erzeugt wird.

Die Aufgabe der Erfindung besteht darin, ein Verfahren und eine Vorrichtung zum Steuern eines Speicherzugriffs in alternativer Ausgestaltung vorzuschlagen, um die Speicherzugriffe effizienter steuern zu können. Insbesondere soll die Zahl der nötigen Wartezustände verringert werden.

Diese Aufgabe wird durch das Verfahren zum Steuern eines Speicherzugriffs mit den Merkmalen des Patentanspruchs 1 bzw. durch eine Vorrichtung zum Steuern eines Speicherzugriffs mit den Merkmalen des Patentanspruchs 14 gelöst.

Vorteilhaft ist demgemäss ein Verfahren zum Steuern eines Speicherzugriffs, bei dem zum Speicherzugriff auf eine Speichereinrichtung für eine zentrale Steuereinrichtung eine Anzahl von Wartezuständen festgelegt wird, wobei abhängig von einer Analyse eines momentanen Zustands der zentralen Steuereinrichtung und einer Art der zuzugreifenden Speichereinrichtung und einer Adresse der zuzugreifenden Speichereinrichtung die Anzahl der Wartezustände für den Speicherzugriff individuell festgelegt wird. Vorrichtungsgemäß wird entsprechend eine Vorrichtung zum Steuern eines Speicherzugriffs bereit gestellt, die einen ersten Anschluss an eine zentrale Steuereinrichtung zum Übertragen von ersten Daten oder Signalen und einen zweiten Anschluss für Daten bezüglich einer Speichereinrichtung zum Übertragen von zweiten Daten oder Signalen sowie eine Steuereinrichtung zum Steuern des Speicherzugriffs auf die Speichereinrichtung und zum Festlegen von Wartezuständen der zentralen Steuereinrichtung aufweist, wobei die Steuereinrichtung zum Analysieren der ersten Daten bezüglich des momentanen Zustands der zentralen Steuereinrichtung und der zweiten Daten bezüglich einer Art und einer Adresse der Speichereinrichtung, auf die der Speicherzugriff erfolgen soll, und zum Festlegen der Wartezustände ausgebildet ist. Entsprechend dient der erste Anschluss insbesondere zum Übertragen von Adressdaten für Speicherzugriffe auf die Speichereinrichtung und der zweite Anschluss zum Übertragen von Zustandsdaten, insbesondere zum Übertragen der Anzahl von Wartezuständen an die zentrale Steuereinrichtung, also für Daten bezüglich Speicherzugriffen auf eine bestimmte Speichereinrichtung.

Mit Blick auf Kenntnis des momentanen CPU-Zustands oder Kenntnis von Art bzw. Adresse der zuzugreifenden Speichereinrichtung wird zumindest ein Teil dieser Informationen für einen CPU-Zugriff bei einer Auswahl verwendet. Bei Zugriffen eines Cach-Controllers gilt das jedoch nicht. Hier wird immer gleich, üblicherweise eine komplette Cach Line eingelesen. Eingelesen wird also z.B. ein 32bit RANDOM Zugriff, der z.B. 3 Wartezustände benötigt, gefolgt von 3 weiteren 32bit BURST Zugriffen mit z.B. je einem Wartezustand. Gleiches kann auch für die Abfolge (Burst) von Zugriffen einer DAM gelten.

Vorteilhafte Ausgestaltungen sind Gegenstand abhängiger Ansprüche.

Vorteilhafterweise wird das Festlegen der Anzahl erforderlicher Wartezustände in einer gegenüber der zentralen Steuereinrichtung separaten Speichersteuereinrichtung durchgeführt und die Wartezustände der zentralen Steuereinrichtung werden mittels eines Wartezustandssignals signalisiert. Dadurch kann die zentrale Steuereinrichtung von derartigen Verwaltungsarbeiten entlastet werden.

Vorteilhafterweise wird beim Analysieren und Festlegen der Anzahl der erforderlichen Wartezustände eine für die Art des Speicherzugriffs und/oder die Art der zuzugreifenden Speichereinrichtung maximale Anzahl von erforderlichen Wartezuständen bestimmt und in einem Wartezustands-Zähler verwendet. Der Wartezustands-Zähler dient dabei insbesondere zum Abgleichen der bereits genutzten und der noch erforderlichen Wartezustände, wobei die zentrale Steuereinrichtung parallel ungestört arbeiten kann.

Vorteilhafterweise wird für die Analyse eine Adresse verwendet, welche von der zentralen Steuereinrichtung auf einen Adressbus zum Adressieren der zumindest einen Speichereinrichtung gesetzt wird. Eine die zentrale Steuereinrichtung belastende separate Übergabe der Adresse oder sonstiger Daten bezüglich der zuzugreifenden Speichereinrichtung entfällt somit.

Vorteilhafterweise vergleicht ein Adressvergleicher eine anliegende Adresse mit einer zu einem früheren Zeitpunkt, insbesondere unmittelbar zuvor anliegenden Adresse, daraufhin, ob es sich um Adressen auf einer gleichen Speicherseite, ob es sich inkrementierte Adressen und/oder ob es sich um gleiche Adressen handelt, wobei in einem solchen Fall die Anzahl erforderlicher Wartezustände gegenüber anderen Fällen reduziert wird.

Vorteilhafterweise vergleicht ein Adressvergleicher eine anliegende Adresse mit einer zu einem früheren Zeitpunkt, insbesondere unmittelbar zuvor anliegenden Adresse daraufhin, ob die momentan anliegende Adresse einer insbesondere internen Speichereinrichtung ohne erforderliche Wartezustände zugeordnet ist und die dazu vorherige und nachfolgende Adresse eine Adresse einer insbesondere externen Speichereinrichtung mit erforderlichen Wartezuständen zugeordnet ist, wobei in einem solchen Fall die Anzahl erforderlicher Wartezustände gegenüber anderen Fällen reduziert wird. Insbesondere wird die Anzahl der Wartezustände für den externen Speicherzugriff reduziert, falls die externen Speicherzugriffe inkrementierende Adressen, gleiche Adressen oder Adressen einer Speicherseite betreffen. Vorteilhaft bei einem solchen Verfahren ist eine Speichersteuereinrichtung, die im Zyklus des Speicherzugriffes auf die Speichereinrichtung schon selbstständig eine weitere Adresse generiert und der externen Speichereinrichtung zur Verfügung stellt. Dies spart einen Wartezustand.

Vorteilhafterweise werden im Fall interner Zyklen der zentralen Steuereinrichtung Speicherzugriffe auf eine bereits anliegende zukünftig zu verwendende Adresse unabhängig von der zentralen Steuereinrichtung durchgeführt, um nach Ende des internen Zyklus ohne Wartezustände entsprechende Daten zu übertragen. Die Adresse für einen nachfolgend zu erwartenden Zugriff der zentralen Steuereinrichtung kann von der zentralen Steuereinrichtung geliefert werden oder von der Speichersteuereinrichtung selbst erzeugt werden.

Vorteilhaft ist die Breite eines Busses zur Speichereinrichtung größer als die von der zentralen Steuereinrichtung angeforderte Breite der Daten von der Speichereinrichtung, wobei in diesem Fall die Anzahl der Wartezustände entsprechend einer enger getakteten Datenübertragung reduziert wird. Die angeforderte Datenbreite ist somit kleiner als die vorhandene Datenbreite. Damit können RANDOM-, aber auch Page- und Burst-Zugriffe beschleunigt werden. Vorteilhaft bekommt dabei eine Brückeneinrichtung zwischen Datenbus und der Speichereinrichtung aufeinanderfolgende Adressen angelegt, bei denen Zwischenadressen ausgelassen sind, und zusätzlich eine Signalisierung zum Adressieren der ausgelassenen Adressen angelegt.

Vorteilhaft werden im Falle eines Speicherzugriffs auf eine Speichereinrichtung mit verschiedenen Ebenen von Seiten-und/oder Burst-Zugriffstypen, denen verschiedene Zugriffszeiten zugeordnet sind, entsprechend maximal erforderliche Wartezustände für die einzelnen Speicherzugriffe festgelegt.

Vorteilhaft wird im Falle eines Speicherzugriffs auf eine offene Seite die Anzahl der Wartezustände im Vergleich zum Zugriff auf eine nicht offene Seite reduziert.

Vorteilhaft werden zum Bestimmen der Anzahl erforderlicher Wartezustände in einer Speichereinrichtung einer Speichersteuereinrichtung zum Durchführen des Verfahrens Eigenschaften von zugreifbaren Speichereinrichtungen und/oder zugreifbaren Adressen mit jeweils zugeordneten erforderlichen Wartezuständen gespeichert.

Vorteilhaft ist die Vorrichtung ausgestattet mit einer Speichereinrichtung oder einem Anschluss an eine Speichereinrichtung zum Speichern von Wartezuständen, welche Adressen und/oder Speichereinrichtungen zugeordnet sind, auf die ein solcher Speicherzugriff erfolgen kann.

Die Vorrichtung ist vorteilhaft mit einem Wartezustands-Zähler zum Hochzählen bis zu einem dem erforderlichen Speicherzugriff erforderlichen entsprechenden Grenzwert und mit einer Konfigurationslogik zum Signalisieren eines Wartezustandssignals abhängig vom Erreichen des Grenzwertes im Wartezustands-Zähler und unabhängig von einer Analyse einer zuzugreifenden Adresse ausgestattet.

Vorteilhafterweise wird die Anzahl der Wartezustände für sequenzielle und nicht sequenzielle Zugriffe nur von der entsprechenden Zugriffszeit der jeweiligen Speichereinrichtung bestimmt. Besonders vorteilhaft ist dabei das Ausblenden aller nicht den entsprechenden Speicher adressierenden Zugriffe, da dadurch die sequenziellen Zugriffsfolgen innerhalb der Speichereinrichtung nicht gestört werden. Dies ermöglicht eine Erhöhung des Anteils der sequenziellen Zugriffe.

Bei den für sich bekannten "Merged IS Cycles" kann sowohl bei einem sequenziellen als auch bei einem nicht sequenziellen Speicherzugriff jeweils ein Wartezustand eingespart werden.

Vorteilhaft ist auch, dass bei schmaleren Zugriffen auf eine breite Speichereinrichtung, beispielsweise bei einem 16-Bit-Zugriff auf einen 32-Bit breiten Speicher für jeden zweiten Speicherzugriff jeglicher Wartezustand entfallen kann.

Weiterhin verwendet die Speichersteuereinrichtung einen Adresskomparator zum Vergleichen der Adresse. Dem Flash wird somit vorgetäuscht, dass gegebenenfalls kein Adresswechsel stattfindet. Weiterhin kann bei für sich bekannten "Merged IS Cycles" die Speichersteuereinrichtung vorteilhaft ausgenutzt werden.

Ein Ausführungsbeispiel und die Anwendung für verschiedene Konfigurationen der Erfindung wird nachfolgend anhand der Zeichnung näher erläutert. Es zeigen:
- Fig. 1: eine zentrale Steuereinrichtung in einem Computer, welche über Adress- und Datenbusse mit einer Vielzahl verschiedenartiger Speichereinrichtungen sowie über weitere Verbindungen mit einer Speichersteuereinrichtung verbunden ist;
- Fig. 2: einzelne Komponenten der Speichersteuereinrichtung aus Fig. 1;
- Fig. 3: ein beispielhaftes Ablaufdiagramm eines Verfahrens zum Steuern eines Speicherzugriffs mit Blick auf erforderliche Wartezustände; und
- Fig. 4 - 13: Gegenüberstellungen verschiedener Signal- und Datenzustände im zeitlichen Ablauf bei verschiedenen Betriebsarten.

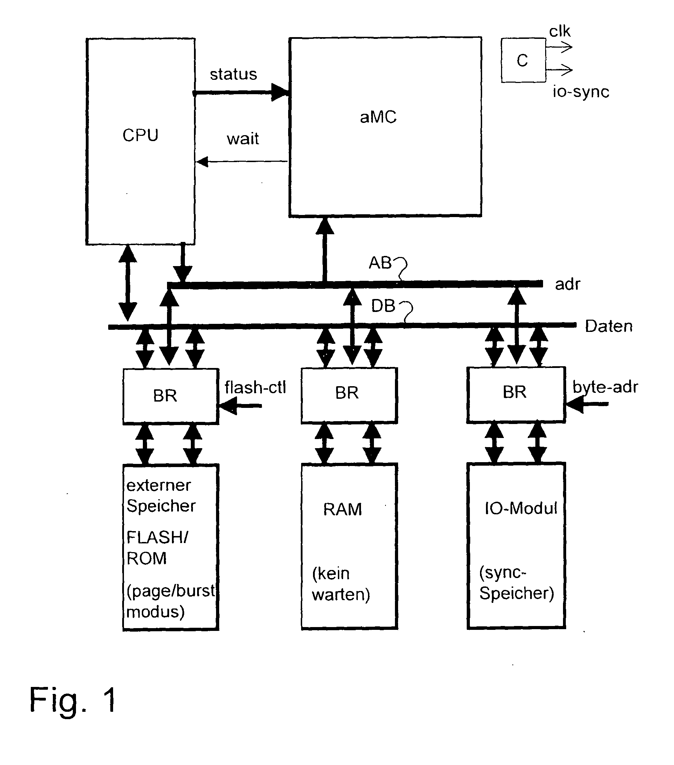

Wie aus Fig. 1 ersichtlich ist, wird eine bevorzugte Speichersteuereinrichtung aMC in einer Computerumgebung mit einer zentralen Steuereinrichtung CPU, Adress- und Datenbussen AB, DB und einer oder mehreren Speichereinrichtungen FLASH/ROM, RAM (RAM: Random Access Memory/Direktzugriffsspeicher), IO-Modul eingesetzt. Dabei werden zwischen der zentralen Steuereinrichtung CPU und den Speichereinrichtungen Daten über den Datenbus DB und optional jeweils eine Brückeneinrichtung BR übertragen, welche zwischen den Datenbus DB und die Speichereinrichtungen FLASH/ROM, RAM bzw. IO-Modul geschaltet ist. Zum Ansteuern der entsprechenden Speicheradressen adr in den Speichereinrichtungen FLASH/ROM, RAM, IO-Modul werden Adressdaten bzw. die jeweilige Adresse adr für einen anstehenden Speicherzugriff über den Adressbus AB und gegebenenfalls die Brückeneinrichtungen BR übertragen.

Außerdem ist die Speichersteuereinrichtung aMC über einen entsprechenden Bus mit dem Adressbus AB verbunden, so dass die von der zentralen Steuereinrichtung CPU auf den Adressbus AB gesetzten Adressen adr auch von der Speichersteuereinrichtung aMC empfangen werden. Die Speichersteuereinrichtung aMC weist außerdem einen Eingang auf, an welchem eine von der zentralen Steuereinrichtung CPU ausgehende Verbindung anliegt. Über diese insbesondere als Bus ausgebildete Verbindung werden momentane und zukünftige Zustandsinformationen der zentralen Steuereinrichtung CPU, also Statusinformationen status, zur Speichersteuereinrichtung aMC übertragen. Außerdem weist die Speichersteuereinrichtung aMC einen Ausgang auf, über den eine Verbindung zur zentralen Steuereinrichtung CPU besteht, um der Speichersteuereinrichtung aMC geeignete Daten bezüglich der Steuerung des anstehenden Speicherzugriffs zu übertragen. Diese Daten sind insbesondere Wartezustände, also ein Wartezustandssignal wait.

Eine Vorrichtung zum Ausbilden einer Speichersteuereinrichtung aMC zum Steuern eines Speicherzugriffs ist somit insbesondere ausgestattet mit einem ersten Anschluss zu einer zentralen Steuereinrichtung CPU zum Übertragen von ersten Daten oder Signalen, wobei als erste Daten (status) Daten bezüglich des momentanen Zustands der zentralen Steuereinrichtung CPU sowie in Gegenrichtung Steuersignale zum Übertragen von Wartezustandssignalen wait übertragen werden. Je nach Ausgestaltung werden über diese oder weitere Verbindungen auch zusätzliche Daten und Steuersignale übertragen. Weiterhin ist die Speichersteuereinrichtung mit einem zweiten Anschluss für Daten bezüglich einer Speichereinrichtung FLASH/ROM, RAM, IO-Modul zum Übertragen von zweiten Daten adr oder Signalen ausgestattet, wobei die zweiten Daten insbesondere eine Adresse bezüglich der Speichereinrichtung FLASH/ROM, RAM, IO-Modul ausbilden, auf die der Speicherzugriff erfolgen soll. Der zweite Anschluss entspricht bei der bevorzugten Ausführungsform dem Eingang, an dem der Adressbus AB angeschlossen ist.

Alternativ können die Adressen auch direkt von der zentralen Steuereinrichtung CPU zur Speichersteuereinrichtung aMC übertragen werden, so dass der zweite Anschluss anstelle eines Eingangs zum Anschluss des Adressbusses AB einen Eingang für eine Verbindung zum Übertragen von Adressdaten von der zentralen Steuereinrichtung CPU ausbildet. Unter Anschlüssen sind alternativ auch einzelne logische oder physikalische Verbindungen einer Anschlusseinrichtung zu verstehen.

Der zweite Anschluss oder weitere Anschlüssen können auch bidirektional ausgebildet sein, um von der Speichersteuereinrichtung aMC Daten und Signale direkt zu den Speichereinrichtungen FLASH/ROM, RAM, IO-Modul zu übertragen. Die Speichersteuereinrichtung aMC ist insbesondere ausgelegt, um in einem System auf Basis einer zentralen Steuereinrichtung CPU mit einer Cash-Speichereinrichtung und einer Cash-Speichersteuereinrichtung betrieben zu werden oder um in einem System auf Basis einer zentralen Steuereinrichtung CPU, die direkt mit einem Speicher gekoppelt ist, betrieben zu werden.

Die Hauptaufgabe der Speichersteuereinrichtung aMC besteht darin, für die zentrale Steuereinrichtung CPU als einem Prozessor eine Schnittstelle zu verschiedenen Umgebungen zu bieten, welche mit beispielsweise verschiedenen Geschwindigkeiten betrieben werden und/oder welche Datenübertragungen über Datenbusse DB mit verschiedenen Busbreiten ermöglichen. Beispielsweise kann ein Registerfeld in dem IO-Modul mit 8 MHz und die zentrale Steuereinrichtung CPU mit 50 MHz betrieben werden, außerdem beispielsweise der Datenbus DB für die Ein- und Ausgabe von Daten in bzw. aus dem IO-Modul eine Breite von 8 Bit aufweisen, während die zentrale Steuereinrichtung CPU in der Lage ist, Daten in einem 8-, 16- oder 32-Bit-Modus einzulesen oder auszulesen. Entsprechend müssen Wartezustände eingeführt werden.

Die Speichersteuereinrichtung aMC erzeugt und liefert vorteilhafterweise auch erforderliche Signale zum Steuern der Brücken BR. Außerdem ist die Speichersteuereinrichtung aMC vorteilhafterweise ausgebildet, das Einsetzen der Wartezustände zu optimieren, wenn die externe Speichereinrichtung FLASH/ROM, RAM, IO-Modul in den Burst-oder den Page-Modus geschaltet wird. Die Information über den Typ der Speichereinrichtung, auf die ein Speicherzugriff erfolgen soll, bezieht die Speichersteuereinrichtung aMC vorteilhafterweise direkt aus der Adresse adr, die von der zentralen Steuereinrichtung CPU über den Adressbus AB übertragen wird. Zusammen mit einem oder mehreren Signalen oder übertragenen Daten (status), welche den Zustand bzw. Status des Prozessors bzw. der zentralen Steuereinrichtung CPU signalisieren, entscheidet die Speichersteuereinrichtung innerhalb vorteilhafterweise eines einzigen Taktzyklus nach Analyse der empfangenen Adresse und des momentanen Zustands der zentralen Steuereinrichtung CPU, welche Anzahl von Wartezuständen einzusetzen bzw. in der zentralen Steuereinrichtung CPU zu berücksichtigen ist.

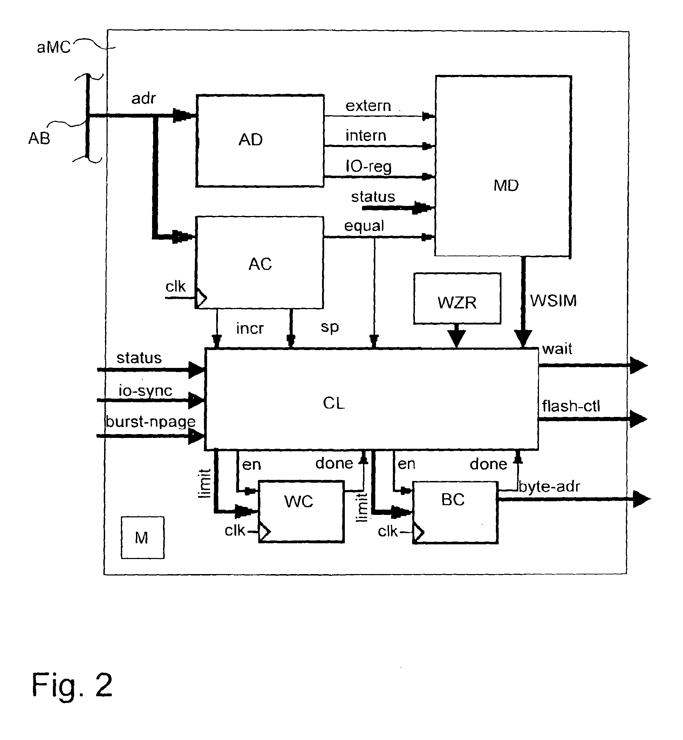

Fig. 2 zeigt einzelne Komponenten einer Speichersteuereinrichtung aMC, welche für die Umsetzung des beschriebenen Konzepts als einzelne bauliche Komponenten oder als integraler Bestandteil einer integrierten Steuer- und Speichereinrichtung umsetzbar sind. Je nach Ausgestaltung weist die Speichersteuereinrichtung aMC weitere bauliche und/oder funktionale Einheiten und Einrichtungen auf. Busse sind, wie in Fig. 1, durch fette Linien dargestellt.

Vom zweiten Anschluss, d. h. dem Eingang zum Adressbus AB, führt ein Bus zu einem Adressdecoder AD und zu einem Adressvergleicher AC. Der Adressdecoder AD weist beim dargestellten Ausführungsbeispiel drei Ausgänge auf, welche zu einem Betriebsart- bzw. Modusdecoder MD führen. Der Adressdecoder AD analysiert die empfange bzw. an seinem Eingang anliegende Adresse adr und bestimmt, auf welche Speichereinrichtung FLASH/ROM, RAM, IO-Modul zugegriffen wird bzw. werden soll. An dem ersten Ausgang des Adressdecoders AD wird ein Signal (extern) angelegt, falls bei der Analyse bestimmt wird, dass die angelegte Adresse adr einen Speicherzugriff auf einen ROM und/oder FLASH als Speichereinrichtung anzeigt. Dadurch wird dem Modusdecoder MD ein externer Speicherzugriff signalisiert. Falls die Adresse adr einen Speicherzugriff auf einen RAM als Speichereinrichtung anzeigt, wird über den zweiten Ausgang des Adressdecoders AD dem Modusdecoders MD ein Zugriff auf eine interne Speichereinrichtung RAM signalisiert (intern). Falls die am Adressdecoder AD angelegte Adresse adr einen Speicherzugriff auf ein Registerfeld des IO-Moduls als Speichereinrichtung anzeigt, wird über den dritten Ausgang des Adressdecoders AD mittels eines entsprechenden Signals (IO-reg) dem Modusdecoder MD der Zugriff auf ein IO-Registerfeld signalisiert, d. h. die Steuerung von Registern des entsprechenden Speicher-Chips. Über weitere Leitungen kann entsprechend eine Signalisierung bezüglich weiterer Speicherzugriffsarten signalisiert werden. Möglich ist auch die Verwendung einer einzigen Leitung an einem einzigen Ausgang des Adressdecoders, wobei dann über die Leitung in codierter Form, beispielsweise mit verschiedenen Spannungspegeln, eine Signalisierung des jeweiligen Adresstyps extern, intern oder IO-Registerzugriff an den Modusdecoder MD signalisiert wird.

Der Adressvergleicher AC weist neben dem Eingang zum Anlegen der Adresse adr einen Takteingang zum Anlegen eines Taktsignals clk auf. Der Adressvergleicher AC vergleicht die Adresse des momentanen und des vorhergehenden Zyklus der zentralen Steuereinrichtung CPU. Das Ergebnis sind drei verschiedene Zustände, die wiederum codiert über eine oder einzeln über mehrere Ausgänge oder Leitungen vom Adresskomparator AC ausgegeben werden. Ein erstes Signal incr signalisiert eine Folge inkrementierter Adressen, ein zweites Signal equal signalisiert eine unveränderte bzw. gleichgebliebene Adresse und ein drittes Signal sp signalisiert eine gleichgebliebene Seite, worunter zu verstehen ist, dass zwei aufeinanderfolgende Adressen auf die selbe Seite im Falle eines Seiten-Modus beim Zugriff auf eine externe Speichereinrichtung verweisen. Insbesondere das zweite Signal equal zum Signalisieren der gleichgebliebenen Adresse wird sowohl dem Modusdecoder MD als auch einer Konfigurationslogik CL zugeführt. Die übrigen Signale incr, sp zum Signalisieren der inkrementierten Adresse und des Zugriffs auf eine Adresse innerhalb der gleichen Seite werden ebenfalls der Konfigurationslogik CL zugeführt.

Der Modusdecoder MD weist neben Eingängen für die aufgeführten Signale auch einen Eingang, insbesondere Buseingang, zum Zuführen von Daten und/oder Signalen (status) auf, welche den Zustand der zentralen Steuereinrichtung CPU betreffen. Dies sind beispielsweise ein Speicheranforderungsmerker (Memory Request Flag), eine angeforderte Datenbreite oder ein Merker für sequenzielle Zugriffe (Sequential Flag). Auf Basis der Signale status, welche den Zustand der zentralen Steuereinrichtung CPU beschreiben, und der Daten bzw. Signale, welche vom Adressdecoder AD und dem Adressvergleicher AC angelegt werden, erzeugt der Modusdecoder MD eine Variable WSIM, welche einen Wartezustand-Einsetzmodus beschreibt. Diese Variable WSIM bildet die Basis für eine Hauptsteuerung für Wartezustands- und Byte-Zähler WC, BC. Diese Variable WSIM, die den Wartezustand-Einsetzmodus signalisiert, wird über einen Ausgang des Modusdecoders MD der Konfigurationslogik CL zugeführt, wobei die Übertragung vorzugsweise über einen Bus erfolgt.

Die Konfigurationslogik CL definiert Signale, welche den Wartezustands-Zähler WC und den Byte-Zähler BC steuern. Außerdem erzeugt die Konfigurationslogik CL ein Wartezustandssignal wait, welches über einen entsprechenden Ausgang der zentralen Steuereinrichtung CPU zu deren Steuerung der Wartezustände zugeführt wird. Außerdem erzeugt die Konfigurationslogik CL Signale flash-ctl, welche zum Steuern einer Flash-Speichereinrichtung über einen entsprechenden Ausgang der anzusteuernden Flash-Speichereinrichtung FLASH zugeführt werden.

Die Konfigurationslogik CL ist im wesentlichen zum Durchführen einer kombinatorischen Funktion ausgebildet, welche die Daten und Signale von den verschiedenen Eingängen auf Daten bzw. Signale an deren Ausgänge abhängig von dem Zustand der Variable WSIM zum Signalisieren des Wartezustands-Einsetzmodus abbildet. Für jeden Wert dieser Variable WSIM gibt es eine bestimmte Konfiguration für die beiden Zähler, d. h. den Wartezustands-Zähler WC und den Byte-Zähler BC. Daher wird für diese bauliche und funktionale Komponente der Begriff Konfigurationslogik verwendet.

Vorteilhafterweise ist die zugrundeliegende Funktion leicht zu modifizieren oder zu expandieren, falls die Speichersteuereinrichtung aMC mehr Schnittstellen für beispielsweise den Anschluss eines externen synchronen dynamischen Direktzugriffsspeicher (SDRAM: Synchronous Dynamic Random Access Memory) benötigt.

Zweckmäßigerweise weist die Konfigurationslogik CL weitere Eingänge auf, beispielsweise zum Zuführen von Signalen und Daten status zum Beschreiben des momentanen Zustands der zentralen Steuereinrichtung CPU, zum Zuführen eines Synchronisierungssignals io-sync und zum Zuführen eines Signals burst-npage zum Bestimmen eines Burst- oder Seitenzugriffs.

Die Konfigurationslogik CL weist für jeden der Zähler WC, BC zwei Ausgänge auf, einen jeweiligen Ausgang zum Anlegen eines Freigabesignals en und einen Ausgang zum Anlegen eines Grenzwertes limit für den jeweiligen Zähler WC, BC. Der Wartezustand-Zähler WC und der Byte-Zähler BC weisen neben Eingängen zum Anlegen des jeweiligen Freigabesignals en und des jeweiligen Grenzwertes limit einen Eingang zum Anlegen des Taktes clk auf. Der Wartezustand-Zähler WC und der Byte-Zähler BC sind einfache Vorwärtszähler, welche jeweils den Zählwert erhöhen, wenn bei Änderung des anliegenden Taktes clk außerdem das entsprechende Freigabesignal en anliegt. Wenn die Zähler WC, BC den jeweils zugewiesenen Grenzwert erreichen, wird über einen jeweiligen Ausgang ein Bestätigungssignal done an entsprechende Eingänge der Konfigurationslogik CL angelegt. Der momentane Wert des Byte-Zählers BC wird über einen weiteren Ausgang zum Ausgeben von Adressdaten Byte-adr ausgegeben und zum Auswählen von Bytes in den Brücken BR verwendet. Entsprechend besteht eine Übertragungsverbindung zwischen dem Byte-Zähler BC bzw. der Speichersteuereinrichtung aMC und einzelnen oder allen der Brücken BR. Der Wartezustands-Zähler WC, der Byte-Zähler BC und die Konfigurationslogik CL erzeugen im Prinzip zusammen eine doppelt verkettete endliche Zustandsmaschine und können beide, einerseits die Zähler WC, BC und andererseits die Konfigurationslogik CL, parallel betrieben werden.

Die Speichersteuereinrichtung aMC weist vorzugsweise außerdem Wartezustands-Register WZR auf, welche die Werte halten, welche die Anzahl von Wartezuständen bestimmen, welche einzusetzen sind, wenn auf eine externe Speichereinrichtung in verschiedenen Betriebszuständen zugegriffen wird. Die Werte werden der Konfigurationslogik CL zugeführt. Zum Unterstützen auch hierarchischer Page/Burst-Betriebszustände sind zwei Register-Paare verfügbar.

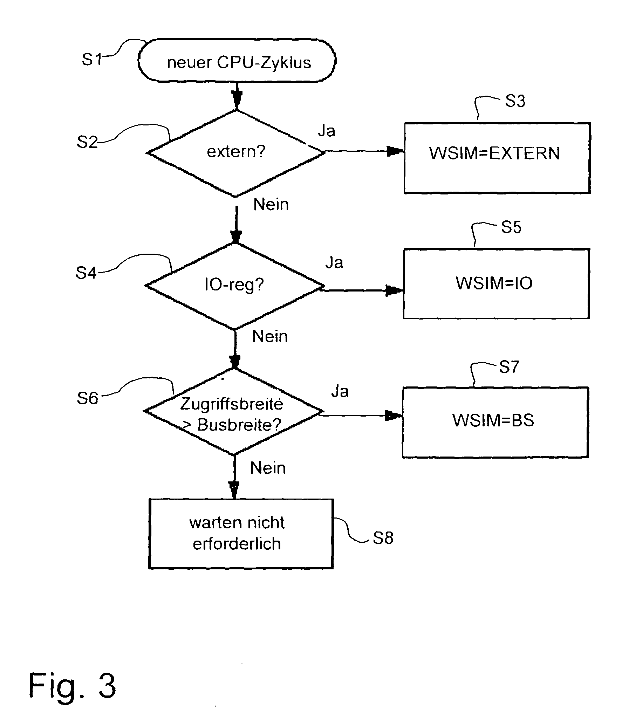

Bei der Bewertung der Betriebsarten berücksichtigt der Modusdecoder MD unterschiedliche Prioritäten, wie dies aus Fig. 3 entnehmbar ist. Im Fall eines neuen Zyklus der zentralen Speichereinrichtung CPU (Schritt S1) wird zuerst geprüft (Schritt S2), ob ein Speicherzugriff auf eine externe Speichereinrichtung vorliegt. Falls ja, wird nachfolgend (S3) die Variable WSIM zum Signalisieren des Wartezustands-Einsetzmodus mit einem den externen Speicherzugriff signalisierenden Wert EXTERN belegt. Dem externen Speicherzugriff, d. h. beispielsweise, wenn die zentrale Steuereinrichtung CPU auf die externe Speichereinrichtung FLASH/ROM zugreift, wird bevorzugt die höchst priorisierte Betriebsart zugewiesen. Die Anzahl der Wartezustände in dieser Betriebsart hängt von der Konfiguration der externen Speichereinrichtung FLASH/ROM ab, insbesondere davon, ob diese im Burst-Modus, im Seiten-Modus oder asynchron betrieben wird. Entsprechende Wartezustands-Zählerwerte sind in Konfigurationsregistern M der Speichersteuereinrichtung aMC programmiert, wobei die entsprechenden Komponenten, insbesondere die Konfigurationslogik CL, auf diese Wartezustands-Zählwerte entsprechend der angelegten und analysierten Adresse adr sowie des angelegten Zustandssignals status der zentralen Steuereinrichtung CPU zugreifen.

Die nächst höhere Priorität hat vorzugsweise ein Speicherzugriff auf ein IO-Modul als Speichereinrichtung. Diesbezüglich findet eine Reservierung für eine Synchronisierung mit dem langsameren Bus von IO-Registern statt. Dabei wird die zentrale Steuereinrichtung CPU mit Hilfe eines Synchronisierungssignals io-sync synchronisiert, welches von einem Taktgenerator C stammt. Das Synchronisierungssignal io-sync wird entsprechend einem Eingang der Konfigurationslogik CL angelegt.

Bei dem Analyseablauf in dem Modusdecoder MD wird im Fall der Feststellung, dass kein Zugriff auf eine externe Speichereinrichtung erfolgt, in einem nachfolgenden Schritt S4 bestimmt, ob ein derartiger Zugriff auf ein IO-Modul als externer Speichereinrichtung erfolgt. Falls ja, wird nachfolgend (Schritt S5) die Variable zum Signalisieren des Wartezustand-Einsetz-Modus WSIM mit einem entsprechenden Wert IO belegt.

Falls kein Speicherzugriff auf ein solches IO-Modul erfolgen soll, wird nachfolgend geprüft (Schritt S6), ob die momentan verwendete Datenzugriffsbreite der zentralen Steuereinrichtung CPU größer als die Busbreite des Datenbusses DB ist. Falls ja, müssen Wartezustände eingesetzt werden die Variable WSIM für den Wartezustands-Einsetz-Modus wird auf einen entsprechenden Wert BS (Schritt S7) gesetzt. Dadurch wird eine Byte-Auswahl-Betriebsart signalisiert.

Falls die Busbreite und die Zugriffsbreite nicht verschieden sind, wird die Variable WSIM für den Wartezustands-Einsetz-Modus auf einen entsprechenden Wert gesetzt (Schritt S8), welcher anzeigt, dass keine Wartezustände erforderlich sind. Die zentrale Steuereinrichtung CPU kann entsprechend mit der vollen Geschwindigkeit betrieben werden. Dies ist typischerweise der Fall, wenn die zentrale Steuereinrichtung CPU einen internen Zyklus durchführt oder auf eine Speichereinrichtung auf dem selben Chip, beispielsweise ein RAM zugreift, d. h. falls die zentrale Speichereinrichtung CPU z. B. keine Daten über den Datenbus DB benötigt.

Zum Bereitstellen des Taktes clk und gegebenenfalls weiterer Takt- und Synchronisierungssignale io-sync dient vorteilhafterweise der Taktgenerator C, welcher mit den entsprechenden weiteren Einrichtungen des Systems in Verbindung steht.

Um höhere Datenraten bei einer Kommunikation zwischen der zentralen Steuereinrichtung CPU und einer externen Speichereinrichtung FLASH/ROM zu erzielen, unterstützt die Speichersteuereinrichtung aMC vorteilhafterweise den Seiten- bzw. Page-Zugriffsmodus und den Burst-Zugriffsmodus baulich und funktionell.

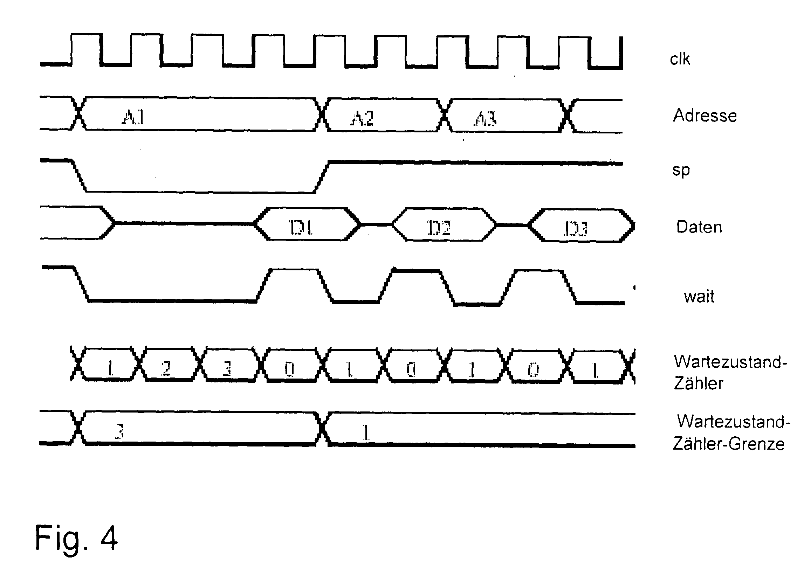

Fig. 4 veranschaulicht einen beispielhaften zeitlichen Ablauf der Zustände verschiedener Signale und Daten für einen Speicherzugriff im Page-Modus. Eine FLASH- oder eine ROM-Speichereinrichtung (ROM: Read Only Memory) ist in Seiten bzw. Pages mit einer bestimmten Größe unterteilt. Falls zwei aufeinanderfolgende Speicherzugriffe auf die gleiche Seite erfolgen, wird die Zugriffszeit deutlich reduziert. Daher setzt die Speichersteuereinrichtung aMC im Vergleich zu Zugriffen auf verschiedene Seiten bei aufeinanderfolgenden Speicherzugriffen auf die gleiche Seite weniger Wartezustände ein. Die entsprechende Information wird nach der Analyse der Adresse adr durch den Adressvergleicher AC durch das entsprechende Signal sp bereitgestellt. Fig. 4 zeigt in zeitlicher Abfolge zuerst einen Fall für einen Zugriff auf verschiedene Speicherseiten mit entsprechend drei Wartezuständen und danach einen Zugriff auf die gleiche Speicherseite mit nur einem Wartezustand.

Die obere Zeile von Fig. 4 stellt den kontinuierlichen Takt clk dar. Die nächste Zeile veranschaulicht die von der zentralen Speichereinrichtung CPU an den Adressbus AB und darüber an die Speichersteuereinrichtung aMC angelegte Adresse (adr). Über die ersten vier Takte liegt eine erste Adresse A1 am Adressbus AB an. Über die jeweils nachfolgenden zwei Takte liegen eine zweite bzw. eine dritte Adresse A2, A3 am Adressbus AB an. Durch die Adressanalyse bestimmt der Adressvergleicher AC, dass während der ersten vier Takte mit der ersten anliegenden Adresse A1 auf verschiedene Speicherseiten zugegriffen wird. Entsprechend ist das Signal sp zum Signalisieren des aufeinanderfolgenden Zugriffs auf die gleiche Seite für diesen Zeitraum in den tiefen Zustand gesetzt. Nachdem zu Beginn des dargestellten Zyklus Daten übertragen wurden, wie dies aus der vierten Zeile ersichtlich ist, wird aufgrund des in tiefen Zustand gesetzten Signals sp über die nachfolgenden zwei Takte keine Datenübertragung über den Datenbus DB durchgeführt. Die zentrale Steuereinrichtung CPU befindet sich bezüglich der Datenübertragung in einem Wartezustand über zwei Takte, wie dies der fünften Zeile entnehmbar ist, welche das Wartezustandssignal wait zeigt, welches über diesen Zeitraum tief gesetzt ist. Nachfolgend wird das Wartezustandssignal wait hochgesetzt, so dass erste Daten D1 übertragen werden. Nachfolgend wird das Wartezustandssignal wait für einen Taktzyklus in dem tiefen Zustand versetzt, während die zweite anliegende Adresse A2 analysiert wird. Da für diese Adresse kein Wartezustand erforderlich ist, wird das Wartezustandssignal wait nach einem Takt wieder hochgesetzt, um die Übertragung zweiter Daten D2 durch einen Speicherzugriff auf die zweite Adresse A2 durchzuführen. Der gleiche Ablauf hinsichtlich des Wartezustandssignals wait und weiterer Signale findet für die Übertragung dritter Daten D3 für die dritte Adresse A3 statt. Da die zweite und dritte Adresse A2, A3 der gleichen Seite zugeordnet sind, ist während der entsprechenden Takte das Signal sp zum Signalisieren der gleichen Adresse durchgehend hochgesetzt. Die sechste Zeile zeigt den jeweiligen Zustand des Wartezustand-Zählers WC. Während des ersten Speicherzugriffs auf die ersten Adresse A1 wird auf eine nicht gleiche Speicherseite zugegriffen, so dass der Wartezustand-Zähler WC bis zum Wert 3 zählt, welcher der Wartezustandsgrenze 3 entspricht, welche dem Wartezustands-Zähler WC über das entsprechende Signal limit signalisiert wird. Die Wartezustands-Zähler-Grenze ist in der siebten Zeile dargestellt. Bei den nach drei Takten erfolgenden Zugriffen auf die zweite und dritte Adresse, welche der gleichen Seite wie der Seite der ersten Adresse A1 zugeordnet sind, wird als Wartezustands-Zähler-Grenze der Wert 1 eingesetzt, so dass der Wartezustands-Zähler WC jeweils von 0 bis 1 hochzählt.

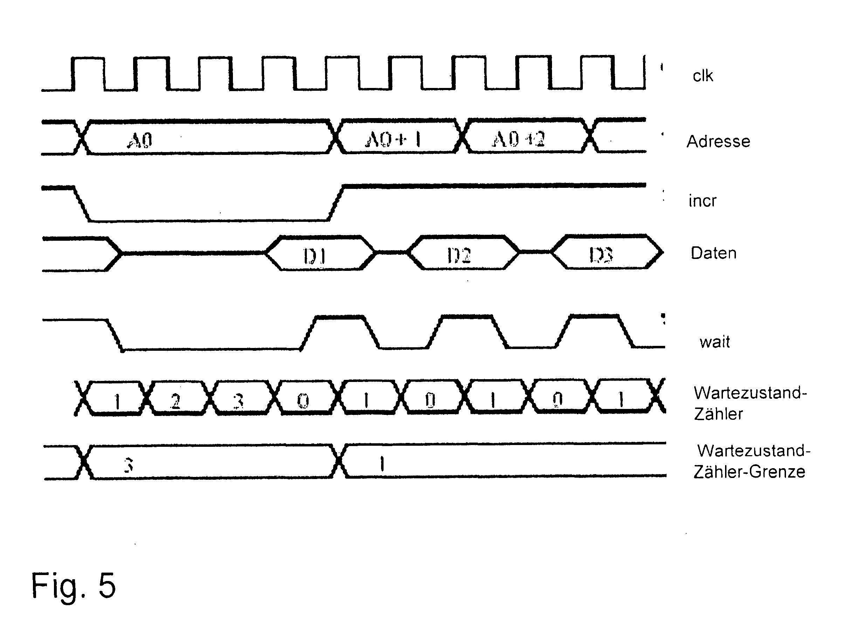

Fig. 5 stellt den Fall eines Speicherzugriffs im Burst-Modus dar. Die Burst-Modus-Flash-Speichereinrichtung FLASH weist einen eingebauten Mechanismus auf, welcher schnellere Speicherzugriffe auf Daten ermöglicht, solange die Adresse gegenüber einer vorherigen Adresse nur inkrementiert wird. Beim Burst-Modus wird somit auf eine Gruppe von Daten mit jeweils aufeinanderfolgenden Adressen A0, A0+1, A0+2 zugegriffen, wie dies aus der zweiten Zeile in Fig. 5 ersichtlich ist. Falls die an dem Adressvergleicher AC anliegende Adresse keine Bezug zu der vorherigen Adresse hat oder das Ende einer Burst-Sequenz erreicht wurde, werden asynchrone Zugriffszeiten angewendet. Der Adressvergleicher AC liefert entsprechend das Signal incr zum Signalisieren inkrementierender Adressen in einem tiefen Zustand. Im Falle inkrementierender Adressen wird dieses Signal incr in den hohen Zustand gesetzt. Das Ende der Signalisierung eines Burst kann beispielsweise über einen speziellen Ausgang der Flash-Speichereinrichtung zum Bereitstellen eines entsprechenden Signals burst-npage oder über einen in der Speichersteuereinrichtung aMC integrierten Burst-Zähler bereitgestellt werden. Fig. 5 stellt beispielhaft den Fall dar, bei dem über erste vier Takte eine erste Adresse A0 bezüglich erster Daten D1 anliegt, welche im asynchronen Modus unter Einsatz von drei Wartezuständen zu übertragen sind. Nachfolgend wird auf eine zweite und eine dritte Adresse A0+1, A0+2 zugegriffen, welche gegenüber der ersten Adresse jeweils einen um 1 inkrementierten Adresswert aufweisen. Entsprechend wird das Signal incr zum Signalisieren inkrementierender Adressen über die ersten vier Takte in den tiefen Zustand zum Signalisieren des asynchronen Speicherzugriffs und nachfolgend in den hohen Zustand zum Signalisieren des synchronen Speicherzugriffs gesetzt. Die Übertragung der Daten D1, D2, D3, die Signalisierung des Wartezustandsignals wait, die Zustände des Wartezustand-Zählers WC und der Wartezustand-Zähler-Grenze entsprechen denen des Beispiels aus Fig. 4, weshalb bezüglich der einzelnen Zustandsbeschreibungen auf diese verwiesen wird. Vorteilhafterweise berücksichtigt die Speichersteuereinrichtung aMC auch spezielle Merkmale.

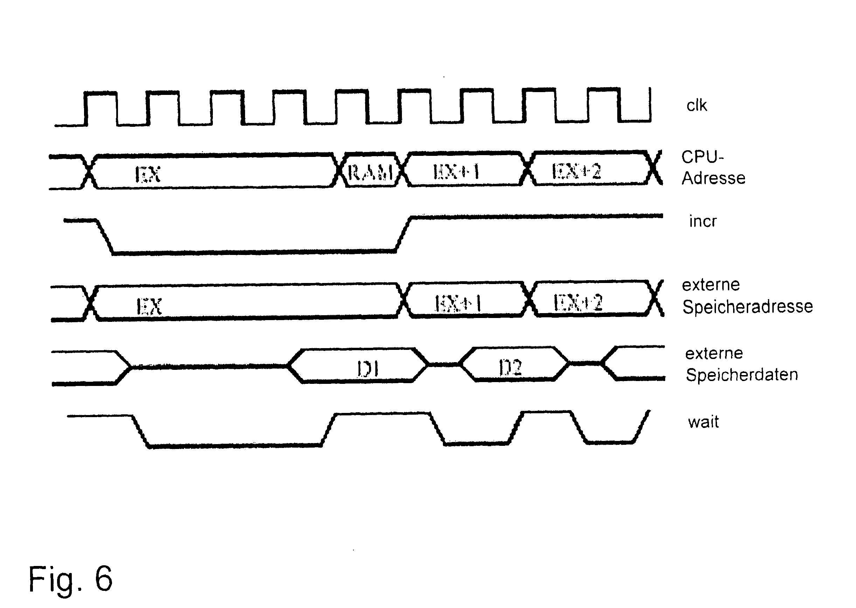

Wenn der Adressvergleicher Signale incr, equal, sp zum Signalisieren inkrementierender Adressen, gleicher Adressen und Adressen auf der gleichen Seite ausgibt, dient dies zum Setzen der korrekten Anzahl von Wartezuständen für nur externe Speicherzugriffe, weshalb in diesen Fällen durch die Speichersteuereinrichtung aMC und durch die zentrale Steuereinrichtung CPU nur externe Speicherzugriffe zu berücksichtigen sind. Falls beispielsweise eine Burst-Sequenz durch einen zwischenzeitlichen Speicherzugriff auf einen Direktzugriffspeicher RAM unterbrochen wird, hat dies keinen Einfluss auf die eingesetzten bzw. einzusetzenden Wartezustände des Speicherzugriffs im Burst-Modus, wie dies anhand Fig. 6 veranschaulicht ist. In der zweiten Zeile ist wiederum die von der zentralen Steuereinrichtung CPU auf den Adressbus AB gesetzte Adresse veranschaulicht. Während der ersten vier Takte clk liegt eine Adresse EX für den Zugriff auf eine externe Speichereinrichtung FLASH am Adressbus AB an. Für den nachfolgenden Takt greift die zentrale Steuereinrichtung CPU auf einen Direktzugriffsspeicher, d. h. eine interne Speichereinrichtung RAM zu und signalisiert dies durch das Anlegen einer entsprechenden Adresse RAM. Über die jeweils zwei nachfolgenden Takte clk greift die zentrale Steuereinrichtung CPU wieder auf die externe Speichereinrichtung FLASH zu, und zwar auf gegenüber der ersten Adresse EX inkrementierende externe Adressen EX+1, EX+2. Entsprechend wird während der ersten vier Takte das Signal incr zum Signalisieren inkrementierender Adressen in den tiefen Zustand versetzt. Während des Zugriffs auf die interne Speichereinrichtung RAM verbleibt dieses Signal incr im tiefen Zustand. Die Speichersteuereinrichtung erkennt über den Adressdecoder AD, dass es sich bei diesem Zugriff um einen Speicherzugriff auf eine interne Speichereinrichtung handelt und signalisiert dies dem Modusdecoder MD. Beim Anlegen der nachfolgenden inkrementierenden Adressen EX+1, EX+2 erkennt die Speichersteuereinrichtung aMC, dass es sich um einen erneuten Zugriff auf die externe Speichereinrichtung FLASH handelt und dass außerdem die anliegenden Adressen inkrementierende externe Adressen EX+1, EX+2 sind, so dass das Signal incr zum Signalisieren inkrementierender Adressen in den hohen Zustand gesetzt wird. Entsprechend wird eine externe Speicheradresse EX für einen externen Speicherzugriff über die ersten fünf Takte und nachfolgend externe Speicheradressen EX+1, EX+2 für jeweils zwei nachfolgende Takt clk gehalten. Entsprechend erfolgt nach vier Takten clk die Übertragung erster externer Speicherdaten D1 und jeweils um zwei Takte clk versetzt die Übertragung zweiter bzw. dritter externer Daten D2,D3. Das entsprechende Wartezustandssignal wait wird entsprechend vom ersten bis zum vierten Takt clk in den tiefen Zustand gesetzt, um der zentralen Steuereinrichtung CPU den erforderlichen Wartezustand bezüglich des externen Speicherzugriffs zu signalisieren, woraufhin das Wartezustandssignal wait nachfolgend abwechselnd für jeweils einen Takt in den hohen bzw. tiefen Zustand versetzt wird, um die Übertragung der Daten D1, D2, D3 durchzuführen. Anhand Fig. 6 ist somit eine Art ausgeblendeter Speicherzugriff auf eine interne Adresse RAM veranschaulicht.

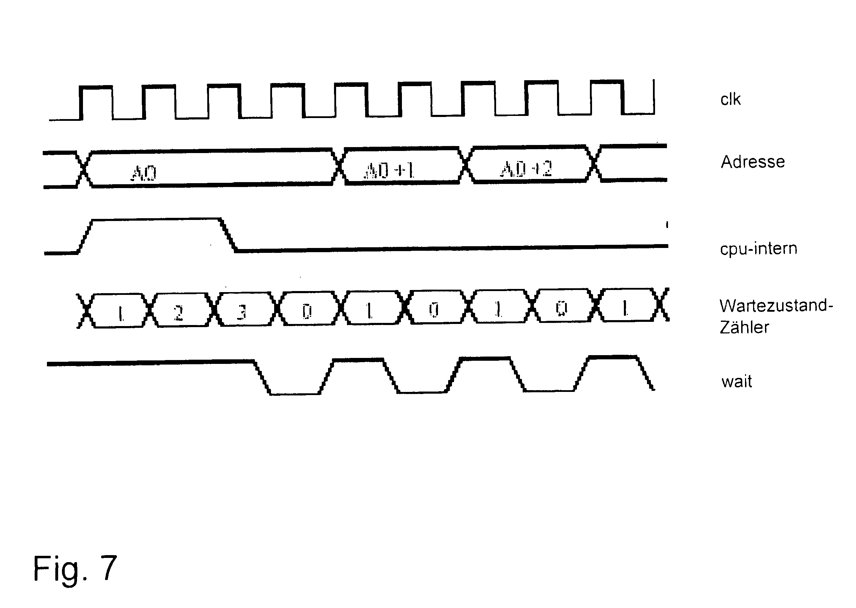

Fig. 7 veranschaulicht den Fall eingeordneter (merged) interner Speicherzugriffe und entsprechender Wartezustands-Zyklen. Bei den internen Zyklen führt die zentrale Steuereinrichtung CPU Verarbeitungsschritte ohne einen Datenzugriff durch. Abhängig von der Art der Anweisung erscheint die Adresse für den Zyklus, welcher dem internen folgt, bereits innerhalb des internen Zyklus auf dem Adressbus AB. Dieses Setzen der zukünftig zu verwendenden Adresse auf den Adressbus AB kann einen oder mehrere Zyklen im Voraus vor dem erforderlichen Speicherzugriff durchgeführt werden. Dies bietet den Vorteil, dass während der Zyklen, während der die zentrale Steuereinrichtung CPU sich in internen Zyklen befindet, die Speichersteuereinrichtung aMC bereits auf den nachfolgenden zuzugreifenden externen Speicher FLASH/ROM, IO-Modul zugreifen kann und die Wartezustände parallel zu den internen Zyklen hochzählen kann. Anhand Fig. 7 ist ein beispielhafter Fall dargestellt, bei dem zwei interne Zyklen von einem asynchronen externen Speicherzugriff gefolgt werden, welcher drei Wartezustände erforderlich macht. Der Zugriff auf den externen Speicher FLASH wird bereits mit dem Beginn des ersten internen Zyklus gestartet, da die erforderliche erste Adresse A0 bereits am Adressbus AB verfügbar ist. Während der internen Zyklen wird an die Speichersteuereinrichtung aMC über das Zustandssignal status von der zentralen Steuereinrichtung CPU ausgehend ein Signal cpu-intern in hohem Zustand angelegt. Nach Beendigung der beiden internen Zyklen wird dieses Signal von der zentralen Steuereinrichtung CPU wieder in den tiefen Zustand versetzt. Wie dargestellt, liegt über die ersten vier Takte clk die erste Adresse A0 für den asynchronen Speicherzugriff am Adressbus AB an. Während dieser Zeit zählt der Wartezustands-Zähler pro Takt clk hoch. Wie dies anhand des Wartezustandssignals wait veranschaulicht ist, entfallen für die zentrale Steuereinrichtung CPU ansonsten übliche Wartezustände, da die Speichersteuereinrichtung aMC während der internen Zyklen bereits die Zugriffe auf die externe Speichereinrichtung FLASH vorbereiten konnte. Das Wartezustandssignal wait ist entsprechend nur während der ersten beiden Takte clk in den hohen Zustand versetzt, um dann für jeweils zwei Takte in den hohen bzw. tiefen Zustand versetzt zu werden, um die Zugriffe auf die erste externe Adresse A0 und die dann folgenden inkrementierenden externen Adressen A0+1, A0+2 durchzuführen. Gegebenenfalls zwischenzuspeichernde Daten können optional in einer zusätzlichen Speichereinrichtung in der Speichersteuereinrichtung aMC, in der zentralen Steuereinrichtung CPU oder in einem dieser vorgeschalteten Speicher zwischengespeichert werden, was auch für die anderen Ausführungsbeispiele gilt.

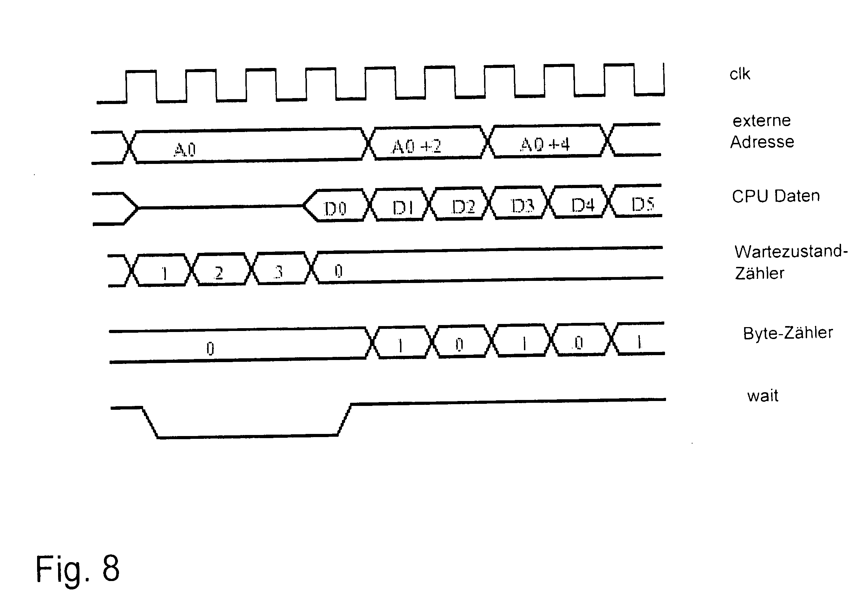

Fig. 8 stellt ein Ausführungsbeispiel für eine andere Art und Weise zum Erhöhen der Datenrate bei einer Datenübertragung zwischen der zentralen Steuereinrichtung CPU und einer externen Speichereinrichtung dar, die hier auch als Überabtastung (Oversampling) bezeichnet wird. Betrachtet wird beispielhaft der Fall einer externen Speichereinrichtung IO-Modul, welche mit dem System bzw. insbesondere der zentralen Steuereinrichtung CPU über einen Bus, insbesondere Datenbus DB zum Übertragen von Daten zwischen diesen verbunden ist, wobei die Breite des Busses N-fach breiter als die erforderliche Datenbreite ist. Demzufolge sind rechnerisch N-fach weniger Zugriffe auf den externen Speicher erforderlich und folglich kann eine signifikante Anzahl von Wartezuständen eingespart werden.

Das dargestellte Beispiel zeigt einen Fall, bei dem die zentrale Steuereinrichtung CPU einen 16-Bit breiten Befehlsschlüssel (OP-Code/Operating-Code) abruft und die externe Speichereinrichtung über einen 32-Bit breiten Bus mit der zentralen Steuereinrichtung CPU verbunden ist. Für den ersten Zugriff auf eine erste Adresse A0 sind in für sich bekannter Art und Weise drei Wartezustände erforderlich, bevor erste Daten D0 übertragen werden. Für Zugriffe auf nachfolgende Adressen wäre ohne eine Überabtastung jeweils ein Wartezustand vor der Übertragung weiterer Daten D1 - D5 erforderlich. Jedoch ermöglicht die dargestellte Überabtastung im vorliegenden Fall einen kontinuierlichen Datenstrom, d. h. die nachfolgenden Daten D1 - D5 können aufeinanderfolgend ohne Wartezustände über den Datenbus DB übertragen werden, solange der Speicherzugriff auf Adressen innerhalb einer Burst-Sequenz oder einer Seite erfolgt. Wie aus der Fig. ersichtlich, werden an den Adressbus AB bei einem ersten Takt clk eine Adresse A0, bei einem fünften Takt clk eine Adresse A0+2 und bei einem siebten Takt clk eine Adresse A0+4 angelegt, d. h. alle zwei nachfolgenden Takte nach Beginn der Datenübertragung wird eine Adresse unter Auslassung der jeweils nachfolgenden Adresse angelegt. Der Wartezustands-Zähler WC zählt während der ersten vier Takte clk von 1 über 2 bis zum Grenzwert 3 und wird wieder auf den Wert 0 zurückgesetzt. Auf diesem verbleibt der Wartezustand-Zähler WC während der nachfolgenden Übertragungen. Während der Wartezustands-Zähler WC hoch gezählt wird, verbleibt der Byte-Zähler BC auf dem Wert 0. Mit Beginn der Datenübertragung gemäß dem Konzept der Überabtastung wird der Byte-Zähler BC beim Anlegen einer neuen Adresse A0+2, A0+4 jeweils auf den Wert 1 hochgesetzt, um einen Takt clk später auf den Wert 0 zurückgesetzt zu werden. Während dieser Zeit werden Daten D1, D3 bei einem ersten der jeweils zwei Takte und Daten D2, D4 bei einem zweiten der jeweils zwei Takte übertragen. Die zweiten Daten D2, D4 entsprechen dabei den Daten der beim Anlegen der externen Adresse A0+2, A0+4 ausgelassenen Adresse. Das Wartezustandssignal wait wird während der ersten vier Takte, während der die erste Adresse A0 anliegt, in den tiefen Zustand gesetzt, um den Wartezustand zu signalisieren. Nachfolgend wird das Wartezustandssignal wait kontinuierlich in dem hochgesetzten Zustand belassen. Möglich ist alternativ auch eine Ausführungsvariante, bei welcher der Byte-Zähler nicht berücksichtigt wird.

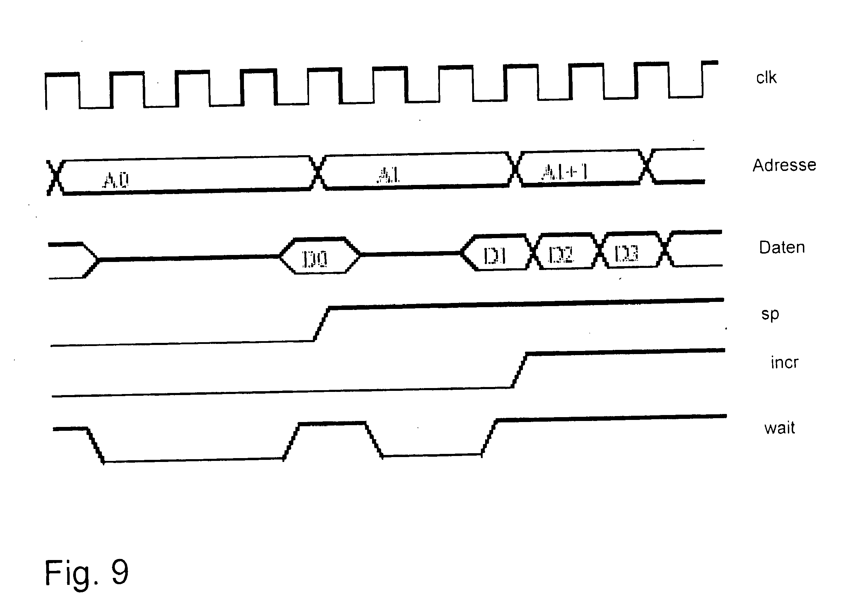

Nachfolgend wird anhand Fig. 9 ein Ausführungsbeispiel erläutert, bei dem hierarchische Zugriffe auf Seiten und/oder Burst-Modus-Zugriffe auf eine Speichereinrichtung durchgeführt werden. Die externe Speichereinrichtung kann somit so organisiert sein, dass es mehrere hierarchische Ebenen der Seiten- und/oder Burst-Speicherzugriffstypen gibt. Jeder dieser Ebenen kann eine verschiedene Speicherzugriffszeit zugewiesen sein. Die vorliegend beispielhafte Version einer bevorzugten Speichersteuereinrichtung aMC unterstützt eine Hierarchie mit zwei Ebenen in entweder einem Seiten-Subseiten-Modus oder in einem Seiten-Burst-Modus. Das anhand Fig. 9 dargestellte Ablaufdiagramm zeigt ein hierarchisches Beispiel eines Seiten-Burst-Modus mit Überabtastung auf der untersten Ebene. Ein zufälliger direkter (RANDOM) Speicherzugriff auf der obersten (top) Ebene erfordert drei Wartezustände, wie dies anhand der ersten anliegenden Adresse A0 mit einem für drei Takte clk in den tiefen Zustand gesetzten Wartezustandssignal wait veranschaulicht ist. Bei einem Speicherzugriff in der gleichen Seite und bei einem Nicht-Burst-Speicherzugriff sind zwei Wartezustände erforderlich, wie dies anhand der nachfolgend angelegten zweiten Adresse A1 mit einer entsprechend kürzeren Dauer des tiefgesetzten Wartezustandssignal wait veranschaulicht ist. Vor dem Anlegen der zweiten Adresse A1 befindet sich das Wartezustandssignal wait für einen Takt im hochgesetzten Zustand, so dass erste Daten D0 übertragen werden. Zwei Takte clk nach dem Heruntersetzen des Wartezustandssignals wait aufgrund des Anlegens der zweiten Adresse A1 an den Adressbus AB wird das Wartezustandssignal wait wieder hochgesetzt, so dass weitere Übertragungen von Daten D1, D2, D3 durchgeführt werden können. Nach dem Anlegen der zweiten Adresse A1 wird eine dritte Adresse A1+1 bzw. A2 angelegt, welche bei dem dargestellten Ausführungsbeispiel den Fall eines In-Burst-Zugriffes darstellt, welcher eigentlich einen Wartezustand erforderlich macht, wobei aber vorliegend der Fall betrachtet wird, dass aufgrund der möglich Überabtastung durch Anlegen direkt nachfolgender weiterer Adressen A3 ohne Wartezustände fortgeschritten werden kann.

Mit dem Anlegen der zweiten Adresse A1 wird das Signal sp zum Signalisieren eines Zugriffs auf die gleiche Speicherseite vom tiefen in den hohen Zustand gesetzt. Beim Anlegen der dritten Adresse A1+1 wird das Signal zum Signalisieren des Inkrementierens incr vom tiefen in den hohen Zustand gesetzt.

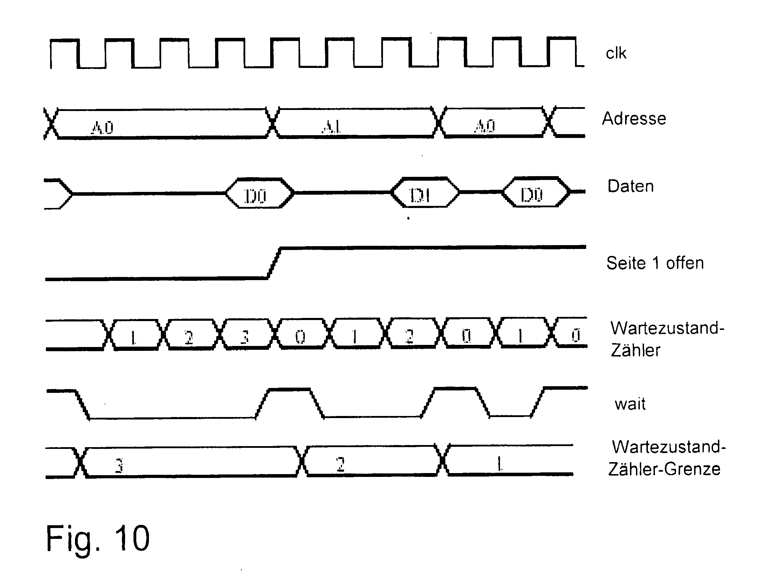

Fig. 10 veranschaulicht den Fall einer externen Speichereinrichtung, welche einen Mechanismus aufweist, der einen schnelleren Speicherzugriff auf eine Seite oder eine Bank ermöglicht, die zuvor bereits geöffnet wurde, d. h. offen ist. Derartige Mechanismen bieten SDRAMs sowie einige Typen von Flash-Speichereinrichtungen FLASH. Es handelt sich somit um Zugriffe auf eine offene Seite bzw. um eine Speicherbank-Nachführung. Der Adressvergleicher AC leitet die entsprechende Information zu der Konfigurationslogik CL, welche den Wartezustands-Zähler WC steuert. Beim dargestellten Ausführungsbeispiel ist die erste Adresse A0 einer ersten Seite und die zweite angelegte Adresse A1 einer dazu verschiedenen Seite zugeordnet. Wie dargestellt, wird der Wartezustands-Zähler WC nach dem Anlegen der ersten Adresse A0 vom Zustand 0 bis zum Zustand 3 hochgezählt, wobei währenddessen das Wartezustandssignal wait sich im tiefgesetzten Zustand befindet. Beim Erreichen des Grenzwertes 3 des Wartezustands-Zähler WC wird das Wartezustandssignal wait für einen Takt in den Zustand hoch gesetzt und der Wartezustands-Zähler WC auf dem Grundwert 0 zurückgesetzt. Da die Seite in der externen Speichereinrichtung geöffnet ist, wird außerdem ein entsprechendes Signal zum Signalisieren der offenen Seite hochgesetzt. Alternativ kann auch ein Flag oder Wert in einer Speichereinrichtung M der Speichersteuereinrichtung aMC gesetzt werden. Zu diesem Zeitpunkt werden außerdem erste Daten D0 übertragen, welche der ersten Adresse A0 zugeordnet sind. Anschließend wird die zweite Adresse A1 angelegt, die einer zur ersten Seite verschiedenen Seite zugeordnet ist. Diesem Zugriff sind zwei Wartezustände zugeordnet, was dem Wartezustands-Zähler WC signalisiert wird. Demzufolge zählt der Wartezustands-Zähler WC nur bis zum Wert 2 hoch, wobei währenddessen das Wartezustandssignal wait in den Zustand tief gesetzt wird. Nach dem Erreichen des Zählwertes 2 im Wartezustand-Zähler WC wird das Wartezustandssignal wait für einen Takt clk hochgesetzt, um zweite Daten D1 entsprechend der zweiten Adresse A1 über den Datenbus DB zu übertragen.

Nachfolgend erfolgt ein erneuter Zugriff auf die noch offene erste Seite mit der ersten Adresse A0. Da die Seite bereits offen ist, muss anstelle ansonsten 3 für einen ersten Zugriff auf die Seite erforderlichen Wartezuständen nur ein Wartezustand berücksichtigt werden. Dies wird durch den Grenzwert limit für den Wartezustands-Zähler WC berücksichtigt, so dass der Wartezustands-Zähler WC nur bis zum Wert 1 hochzählt und entsprechend nur für einen Takt clk ein Tiefsetzen des Wartezustandssignals wait erfolgt. Entsprechend kann zwei Takte clk nach dem Übertragen der zweiten Daten eine Übertragung weiterer Daten D0 entsprechend der nun anliegenden ersten Adresse A0 über den Datenbus DB durchgeführt werden. Anstelle des nachfolgenden Zugriffs auf die noch offene erste Seite mit der ersten Adresse A0 kann auch auf eine andere Adresse zugegriffen werden, z. B. auf eine einfach inkrementierte Adresse A0+1.

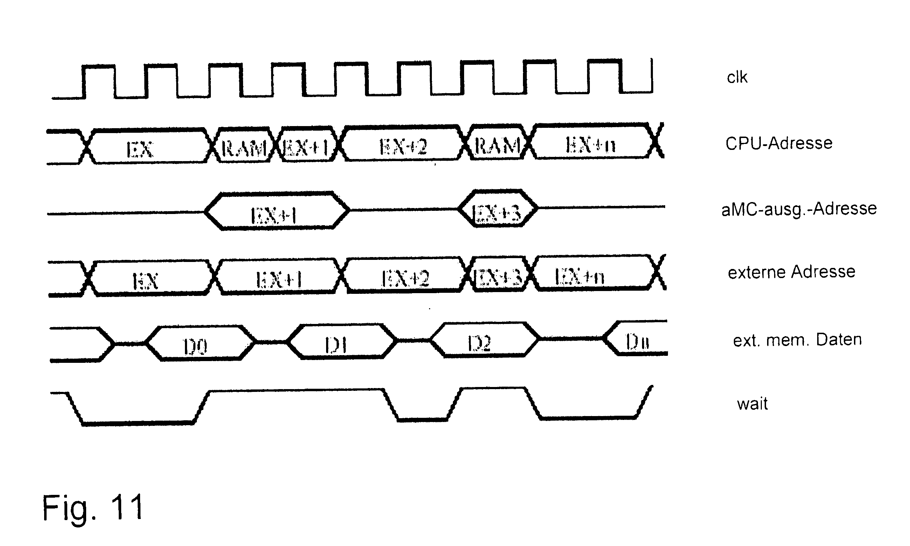

Fig. 11 zeigt den Fall einer Adressinkrementierung, welche zum Bereitstellen einer Adresse für ein vorheriges Abrufen bereitgestellt wird, während die zentrale Steuereinrichtung CPU sich in einem internen Zyklus befindet oder auf eine interne Speicheradresse zugreift. Dieses Merkmal spart Wartezustände, da der externe Speicherzugriff einen oder mehrere Zyklen früher gestartet werden kann. Für den Fall, dass die nächste Anweisung nicht, wie angenommen, das Lesen einer inkrementierten Adresse betrifft, beispielsweise im Fall einer Sprunganweisung, ist die neue Adresse neu zu laden.

Die erste dargestellte Zeile zeigt wiederum den Takt clk. Die zweite Zeile stellt die angelegte Adresse (CPU-Adresse) der zentralen Steuereinrichtung CPU dar. Für die beiden nachfolgenden Takte clk werden Adressen eines Direktzugriffspeichers RAM und einer um 1 inkrementierten Adresse EX+1 der externen Speichereinrichtung angelegt. Nachfolgend wird über zwei Takte eine um nochmals 1 inkrementierte Adresse EX+2 und danach über eine Taktdauer die Adresse des Direktzugriffspeichers RAM angelegt. Letztendlich wird über die beiden nachfolgenden Takte die nochmals inkrementierte Adresse EX+n der externen Speichereinrichtung angelegt. Die dritte Zeile zeigt die von der Speichersteuereinrichtung aMC ausgegebene Adresse (aMC-ausg.-Adresse) an. Während des Anlegens der Adresse der Direkt-Zugriffsspeichereinrichtung RAM wird von der Speichersteuereinrichtung aMC jeweils die entsprechend inkrementierte externe Adresse EX+1 bzw. EX+3 ausgegeben. Die vierte Zeile zeigt die jeweilige externe Adresse, welche jeweils auf den momentanen oder bei einem anderweitigen Speicherzugriff auf den nächsten anzulegenden externen Adresswert EX, EX+1, EX+2, EX+3, EX+n verweist. Die fünfte Zeile gibt die jeweils zu übertragenden externen Speicherdaten (ext mem Daten) D0, D1, D2, Dn an. Die letzte Zeile zeigt wiederum den Zustand des Wartesignals wait. Dieser wechselt jeweils beim Anlegen einer Adresse der internen Speichereinrichtung oder einer weiteren externen Speichereinrichtung vom tiefen in den hohen Zustand sowie beim Anlegen einer inkrementierten Adresse der externen Speichereinrichtung in den tiefen Zustand.

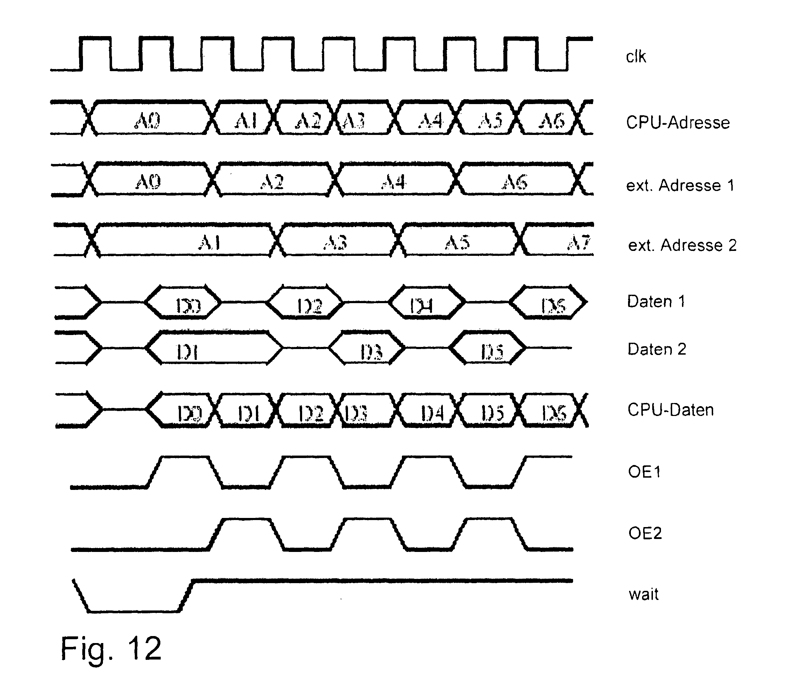

Fig. 12 zeigt ein Beispiel einer asynchron verschachtelten Betriebsart (asynchronous interleaved mode). Dieses Ausführungsbeispiel dient einer effizienten Verwendung von asynchronen externen Speichereinrichtungen. Im Prinzip implementiert die Speichersteuereinrichtung aMC eine Burst-Betriebsartsannäherung unter Verwendung von n Speichereinrichtungen, was die Daten bzw. Datenübertragung n-fach beschleunigt. Das dargestellte Ablaufdiagramm zeigt ein Beispiel mit zwei Einrichtungen, wobei die asynchrone Zugriffszeit einem Taktzyklus entspricht. Daher werden bei einem Burst-Zugriff keine Wartezustände benötigt.

Die erste Zeile zeigt wiederum das Taktsignal clk. Die zweite Zeile stellt die anliegende Adresse (CPU-Adresse) der zentralen Steuereinrichtung CPU dar, vorliegend über zwei Takte die erste Adresse A0 und dann eine jeweils um 1 inkrementierte nachfolgende Adresse A1, A2, ... A6. Die dritte Zeile zeigt eine erste externe Adresse an, wobei über jeweils zwei Taktzyklen ein Adresswechsel vorgenommen wird. Über die beiden ersten Taktzyklen des Taktes clk liegt die erste Adresse A0 an, über die jeweils zwei weiteren Taktzyklen liegt eine jeweils um zwei inkrementierte Adresse A2, A4, A6 an. Die nächste Zeile zeigt den Zustand der zweiten verwendeten Einrichtung und signalisiert die zweite externe Adresse. Nach drei Zyklen des Taktes clk bzw. beim dritten Zyklus liegt die zweite Adresse A1 an. Nachfolgend wird über jeweils zwei Taktzyklen des Taktes clk eine um jeweils zwei inkrementierte Adresse A3, A5, A7 angelegt. Bei Ausführungsformen mit mehr entsprechenden Einrichtungen wird die Inkrementierungsanzahl entsprechend der Anzahl von verfügbaren eigenständigen externen Adressleitungen erhöht. Bei dem dargestellten Ausführungsbeispiel zeigt die fünfte Zeile die Übertragung der entsprechenden ersten Daten D0, D2, D4, D6 gemäß der ersten externen Adresse. Die nachfolgende Zeile zeigt die Übertragung der zweiten Daten D1, D3, D5, welche entsprechend der zweiten externen Adresse übertragen werden. Die siebte Zeile zeigt die Daten D0, D1, D2, ..., D6, welche entsprechend für die zentrale Steuereinrichtung CPU verfügbar sind. Die beiden nachfolgenden Zeilen zeigen die entsprechenden Signalisierungszustände OE1, OE2 der separaten Speichereinrichtungen. Diese befinden sich in jeweils gegenläufigem Zustand und wechseln jeweils im Zyklus von zwei Takten clk. Das Wartezustandssignal wait wechselt nach Beginn der Verfahrensweise, d. h. bereits nach einem Taktzyklus vom tiefen in den hohen Zustand, und verbleibt in diesem, da keine Wartezustände einzufügen sind.

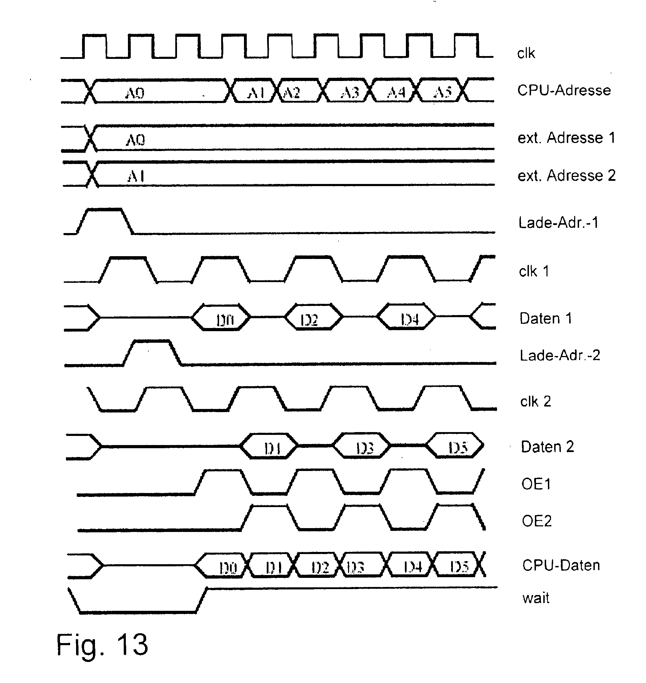

Fig. 13 veranschaulicht eine Ausführungsform für den Fall einer synchronen verschachtelten Betriebsart, welche einen n-fach schnelleren externen Speicherzugriff unter Verwendung von n-Burst-Modus-Einrichtungen ermöglicht. Das Ablaufdiagramm zeigt dabei ein Beispiel verschachtelter (Interleaving) Daten von zwei Burst-Modus-Einrichtungen. Für jeden Speicher sind zwei Wartezustände für den anfänglichen Zugriff und einer für den in-Burst-Zugriff erforderlich. In dem verschachtelten Modus sind daher für einen in-Burst-Zugriff keine Wartezustände erforderlich.

Die erste Zeile zeigt wiederum den Verlauf des Taktsignals clk. Die zweite Zeile zeigt wiederum die angelegte CPU-Adresse, wobei über die drei ersten Takte clk eine erste Adresse A0 anliegt. Nachfolgend werden für jeweils einen Takt clk nachfolgende Adressen A1, A2 - A5 angelegt.

Die dritte und die vierte Zeile zeigen den Zustand der ersten bzw. zweiten externen Adresse an. An diesen liegt ab dem ersten Takt entsprechend die erste bzw. die zweite Adresse A0, A1 an. Die fünfte Zeile zeigt den Zustand eines Adress-Ladesignals Lade-Adr.-1, welches über die Dauer des ersten Taktes in den hohen Zustand und danach wieder in den tiefen Zustand gesetzt ist. Die nachfolgende Zeile zeigt das Signal eines ersten Hilfstaktes clk 1, welches für die Dauer von jeweils etwa 1,5 Zyklen des Taktes clk in den hohen bzw. den tiefen Zustand versetzt wird. Die siebte Zeile zeigt die übertragenen ersten Daten (Daten 1), im vorliegenden Fall ab dem dritten Takt clk erste Daten DO, ab dem fünften Takt clk dritte Daten D2 und ab dem siebten Takt clk fünfte Daten D4, dies für jeweils die Dauer eines Taktes clk. Die drei nächsten Zeilen zeigen den Zustand eines Signals zum Signalisieren des Ladens einer zweiten Adresse (Lade-Adr.-2), eines zweiten Hilfstaktes clk2 sowie weiterer übertragener Daten (Daten 2), wobei die Signale gegenüber der Gruppe entsprechender Signale der drei vorhergehenden Zeilen um jeweils einen Takt clk versetzt sind. Übertragen werden zweite, vierte und sechste Daten D1, D3, D5. Entsprechend dem Ablauf gemäß Fig. 12 dienen zur Koordination der beiden Datenflüsse wiederum Signalisierungssignale OE1, OE2, während deren jeweiligem Hochzustand die Daten aus der ersten bzw. zweiten Gruppe für die zentrale Steuereinrichtung CPU auf einer entsprechenden Datenleitung bzw. einem Bus als CPU-Daten bereitgestellt werden. Das Wartezustandssignal wait wird bei diesem Ablauf entsprechend nur während der beiden ersten Takte clk in den tiefen und danach durchgehend in den hohen Zustand gesetzt.

## Patentansprüche

1. Verfahren zum Steuern eines Speicherzugriffs, bei dem
- zum Speicherzugriff auf eine Speichereinrichtung (FLASH/ROM, RAM, IO-Modul) für eine zentrale Steuereinrichtung (CPU) eine Anzahl von Wartezuständen festgelegt wird,
**dadurch gekennzeichnet dass**,
abhängig von einer Analyse
a) eines momentanen Zustands (status) der zentralen Steuereinrichtung (CPU) und
b) einer Art der zuzugreifenden Speichereinrichtung und
c) einer Adresse (adr) der zuzugreifenden Speichereinrichtung (FLASH/ROM, RAM, IO-Modul)
die Anzahl der Wartezustände für den Speicherzugriff individuell festgelegt wird.

2. Verfahren nach Anspruch 1, bei dem das Festlegen der Anzahl erforderlicher Wartezustände in einer gegenüber der zentralen Steuereinrichtung (CPU) separaten Speichersteuereinrichtung (aMC) durchgeführt wird und die Wartezustände der zentralen Steuereinrichtung (CPU) mittels eines Wartezustandssignals (wait) signalisiert werden.

3. Verfahren nach Anspruch 1 oder 2, bei dem beim Analysieren und Festlegen der Anzahl der erforderlichen Wartezustände eine für die Art des Speicherzugriffs und/oder die Art der zuzugreifenden Speichereinrichtung maximale Anzahl (limit) von erforderlichen Wartezuständen bestimmt und in einem Wartezustands-Zähler (WC) verwendet wird.

4. Verfahren nach einem vorstehenden Anspruch, bei dem für die Analyse eine Adresse (adr) verwendet wird, welche von der zentralen Steuereinrichtung (CPU) auf einen Adressbus (AB) zum Adressieren der zumindest einen Speichereinrichtung gesetzt wird.

5. Verfahren nach einem vorstehenden Anspruch, bei dem ein Adressvergleicher (AC) eine anliegende Adresse (A2, A3; A0+1, A0+2) mit einer zu einem früheren Zeitpunkt, insbesondere unmittelbar zuvor anliegenden Adresse (A1; A0), daraufhin vergleicht, ob es sich um Adressen (A1, A2, A3) auf einer gleichen Speicherseite, ob es sich inkrementierte Adressen (A0, A0+1, A0+2) und/oder ob es sich um gleiche Adressen handelt, wobei in einem solchen Fall die Anzahl erforderlicher Wartezustände gegenüber anderen Fällen reduziert wird.

6. Verfahren nach einem vorstehenden Anspruch, bei dem ein Adressvergleicher (AC) eine anliegende Adresse (RAM, EX+1, EX+2) mit einer zu einem früheren Zeitpunkt, insbesondere unmittelbar zuvor anliegenden Adresse (EX) daraufhin vergleicht, ob die momentan anliegende Adresse einer Speichereinrichtung (RAM) ohne erforderliche Wartezustände zugeordnet ist und die dazu vorherige und nachfolgende Adresse (EX, EX+1) eine Adresse einer Speichereinrichtung (FLASH/ROM) mit erforderlichen Wartezuständen zugeordnet ist, wobei in einem solchen Fall die Anzahl erforderlicher Wartezustände gegenüber anderen Fällen reduziert wird, insbesondere die Anzahl der Wartezustände für den Speicherzugriff mit erforderlichen Wartezuständen reduziert wird, falls die Speicherzugriffe auf die Speichereinrichtung mit erforderlichen Wartezuständen inkrementierende Adressen, gleiche Adressen oder Adressen einer Speicherseite betreffen.

7. Verfahren nach Anspruch 6, bei dem eine Speichersteuereinrichtung (aMC) im Zyklus des Speicherzugriffes auf die Speichereinrichtung (RAM) schon selbstständig eine weitere Adresse (EX+1) generiert und der externen Speichereinrichtung zur Verfügung stellt.

8. Verfahren nach einem vorstehenden Anspruch, bei dem im Fall interner Zyklen der zentralen Steuereinrichtung (CPU) Speicherzugriffe auf eine bereits anliegende zukünftig zu verwendende Adresse (A0) unabhängig von der zentralen Steuereinrichtung (CPU) durchgeführt werden, um nach Ende des internen Zyklus ohne Wartezustände entsprechende Daten zu übertragen.

9. Verfahren nach einem vorstehenden Anspruch, bei dem die Breite eines Busses (DB) zur Speichereinrichtung größer als die von der zentralen Steuereinrichtung angeforderte Breite der Daten von der Speichereinrichtung ist und bei dem in diesem Fall die Anzahl der Wartezustände entsprechend einer enger getakteten Datenübertragung reduziert wird.

10. Verfahren nach Anspruch 9, bei dem eine Brückeneinrichtung (BR) zwischen Datenbus (DB) und der Speichereinrichtung (IO-Modul) aufeinanderfolgende Adressen (A0, A0+2, A0+4) angelegt bekommt, bei denen Zwischenadressen ausgelassen sind, und zusätzlich eine Signalisierung (byte-adr) zum Adressieren der ausgelassenen Adressen angelegt bekommt.

11. Verfahren nach einem vorstehenden Anspruch, bei dem im Falle eines Speicherzugriffs auf eine Speichereinrichtung mit verschiedenen Ebenen von Seiten- und/oder Burst-Zugriffstypen, denen verschiedene Zugriffszeiten zugeordnet sind, entsprechend maximal erforderliche Wartezustände für die einzelnen Speicherzugriffe festgelegt werden.

12. Verfahren nach einem vorstehenden Anspruch, bei dem im Falle eines Speicherzugriffs auf eine offene Seite die Anzahl der Wartezustände im Vergleich zum Zugriff auf eine nicht offene Seite reduziert wird.

13. Verfahren nach einem vorstehenden Anspruch, bei dem zum Bestimmen der Anzahl erforderlicher Wartezustände in einer Speichereinrichtung (M) einer Speichersteuereinrichtung (aMC) zum Durchführen des Verfahrens Eigenschaften von zugreifbaren Speichereinrichtungen und/oder zugreifbaren Adressen mit jeweils zugeordneten erforderlichen Wartezuständen gespeichert werden.

14. Vorrichtung (aMC) zum Steuern eines Speicherzugriffs mit
- einem ersten Anschluss zu einer zentralen Steuereinrichtung (CPU) zum Übertragen von ersten Daten und/oder Signalen (status, wait),
- einem zweiten Anschluss (AB) zum Übertragen von zweiten Daten oder Signalen (adr) bezüglich einer zuzugreifenden Speichereinrichtung (FLASH/ROM, RAM, IO-Modul) und
- einer Steuereinrichtung zum Steuern des Speicherzugriffs auf die Speichereinrichtung und zum Festlegen von Wartezuständen für die zentrale Steuereinrichtung (CPU),
- **dadurch gekennzeichnet, dass** die Steuereinrichtung (aMC; AD, AC, MD, CL, WC, BC) zum Analysieren der ersten Daten (status) bezüglich des momentanen Zustands der zentralen Steuereinrichtung (CPU) und der zweiten Daten (adr) bezüglich einer Art und einer Adresse (adr) der Speichereinrichtung, auf die der Speicherzugriff erfolgen soll, und zum Festlegen der entsprechenden Wartezustände und Signalisieren (wait) der Wartezustände zur zentralen Steuereinrichtung (CPU) ausgebildet ist.

15. Vorrichtung nach Anspruch 14 mit einer Speichereinrichtung (M) oder einem Anschluss an eine Speichereinrichtung zum Speichern von Wartezuständen, welche Adressen und/oder Speichereinrichtungen zugeordnet sind, auf die ein solcher Speicherzugriff erfolgen kann.

16. Vorrichtung nach Anspruch 14 oder 15 mit einem Wartezustands-Zähler (WC) zum Hochzählen bis zu einem dem erforderlichen Speicherzugriff entsprechenden Grenzwert (limit) und mit einer Konfigurationslogik (CL) zum Signalisieren eines Wartezustandssignals (wait) abhängig vom Erreichen des Grenzwertes (limit) im Wartezustands-Zähler (WC) und unabhängig von einer Analyse einer zuzugreifenden Adresse.

## Claims

1. A method for controlling a memory access, with which
- a number of waiting states is established for the memory access to a storage device (FLASH/ROM, RAM, IO module) for a central control unit CPU,
**characterised in that** the number of waiting states for the memory access is established individually, depending on an analysis of
a) a current state (status) of the central control unit CPU and
b) the type of the storage device to be accessed and
c) an address (adr) of the storage device to be accessed (FLASH/ROM, RAM, IO-Module).

2. A method according to Claim 1,
with which the establishment of the number of required waiting states is performed in a memory control unit (aMC) that is separate from the central control unit (CPU), and the waiting states of the central control unit (CPU) are signalled by means of a waiting state signal (wait).

3. A method according to Claim 1 or 2,
with which, when analysing and establishing the number of required waiting states, a maximum number (limit) of required waiting states for the type of memory access and/or the type of storage device to be accessed is determined and is used in a waiting state counter (WC).

4. A method according to a preceding claim,
with which for the analysis there is used an address (adr) that is set by the central control unit (CPU) on an address bus (AB) for addressing the at least one storage device.

5. A method according to a preceding claim,
with which an address comparator (AC) compares a present address (A2, A3; A0+1, A0+2) with an address (A1; A0) that was present at an earlier time, especially one immediately beforehand, to determine whether they are addresses (A1, A2, A3) on the same storage page, incremented addresses (A0, A0+1, A0+2) and/or the same addresses, whereby in such a case the number of required waiting states is reduced compared to other cases.

6. A method according to a preceding claim,
with which an address comparator (AC) compares a present address (RAM, EX+1, EX+2) with an address (EX) that was present at an earlier time, especially one immediately beforehand, to determine whether the currently present address is assigned to a storage device (RAM) without required waiting states and the address (EX, EX+1) prior and subsequent to it is an address assigned to a storage device (FLASH/ROM) with required waiting states, whereby in such a case the number of required waiting states is reduced compared to other cases, especially the number of waiting states for memory access with required waiting states is reduced if the memory accesses to the storage device with required waiting states involve incrementing addresses, the same addresses, or addresses of the same memory page.

7. A method according to Claim 6,
with which a memory control unit (aMC) in the cycle of the memory access to the storage device (RAM) already independently generates an additional address (EX+1) and makes it available to the external storage device.

8. A method according to a preceding claim,
with which in the case of internal cycles of the central control unit (CPU), memory accesses to an already present address (A0) to be used in future are carried out independently of the central control unit (CPU), in order to transfer corresponding data without waiting states after the end of the internal cycle.

9. A method according to a preceding claim,
with which the width of a bus (DB) to the storage device is greater than the width of the data from the storage unit that is required by the central control unit, and with which in this case the number of waiting states is reduced corresponding to a more tightly clocked data transfer.

10. A method according to Claim 9,
with which a bridge device (BR) between data bus (DB) and the storage device (IO module) is provided with consecutive addresses (A0, A0+2, A0+4), from which intermediate addresses are omitted, and in addition is provided with a signalling (byte-adr) to address the omitted addresses.

11. A method according to a preceding claim,
with which in the case of a memory access to a storage device with various levels of page and/or burst access types, to which different access times are assigned, corresponding maximum required waiting states are established for the individual memory accesses.

12. A method according to a preceding claim,
with which in the case of a memory access to an open page, the number of waiting states is reduced in comparison to the access to a not-open page.

13. A method according to a preceding claim,
with which to determine the number of required waiting states in a storage device (M) of a memory control unit (aMC) in order to carry out the method, properties of accessible storage devices and/or accessible addresses with respectively assigned required waiting times are saved in memory.

14. A device (aMC) for controlling a memory access, having
- a first connection to a central control unit (CPU) for the transfer of first data and/or signals (status, wait),
- a second connection (AB) for the transfer of second data or signals (adr) regarding a storage device to be accessed (FLASH/ROM, RAM, IO module), and
- a control unit for controlling the memory access to the storage device and for establishing waiting states for the central control unit (CPU),
**characterised in that** the control unit (aMC; AD, AC, MD, CL, WC, BC) is configured to analyse the first data (status) with respect to the present state of the central control unit (CPU) and the second data (adr) with respect to a type and an address (adr) of the control unit to which access is to be made, and to establish the corresponding waiting states and signalling (wait) of the waiting states to the central control unit (CPU).

15. A device according to Claim 14, having a storage device (M) or a connection to a storage device for storing waiting states in memory, which are assigned to addresses and/or storage devices to which such a memory access can occur.

16. A device according to Claim 14 or 15, having a waiting state counter (WC) for incrementing up to a limit value (limit) corresponding to the required memory access and having a configuration logic (CL) for signalling a waiting state signal (wait), dependent upon reaching the limit value (limit) in the waiting state counter (WC) and independent of an analysis of an address to be accessed.

## Revendications

1. Procédé de commande d'un accès à une mémoire selon lequel pour un accès de mémoire à une installation de mémoire (FLASH/ROM, RAM, MODULE ENTREE/SORTIE), pour une installation de commande centrale (CPU), on fixe un certain nombre d'états d'attente,
**caractérisé en ce qu'**
en fonction d'une analyse
a) d'un état instantané (status) de l'installation de commande centrale (CPU)
b) de la nature de l'installation de mémoire à laquelle accéder et
c) d'une adresse (adr) de l'installation de mémoire à adresser (FLASH/ROM, RAM, MODULE ENTREE/SORTIE)
on fixe individuellement le nombre des états d'attente pour l'accès à la mémoire.

2. Procédé selon la revendication 1,
selon lequel
la fixation du nombre des états d'attente requis est effectuée dans une installation de commande de mémoire (aMC) séparée par rapport à l'installation de commande central (CPU) et
des états d'attente de l'installation de commande centrale (CPU) sont signalés à l'aide d'un signal d'état d'attente (wait).

3. Procédé selon la revendication 1 ou 2,
selon lequel
lorsqu'on analyse et que l'on fixe le nombre des états d'attente requis, on définit un nombre maximum (limit) d'états d'attente nécessaires pour le type d'accès de mémoire et/ou la nature de l'installation de mémoire à accéder, et on les utilise dans un compteur d'états d'attente (WC).

4. Procédé selon l'une des revendications précédentes,
selon lequel
on utilise une adresse (adr) pour l'analyse, cette adresse étant mise par l'installation de commande centrale (CPU) sur un bus d'adresses (AB) pour adresser au moins une installation de mémoire.

5. Procédé selon au moins l'une des revendications précédentes,
selon lequel
un comparateur d'adresses (AC) compare une adresse appliquée (A2, A3 ; A0+1, A0+2) à une adresse (A1 ; A0) appliquée précédemment à un instant antérieur, notamment directement, pour déterminer par comparaison s'il s'agit des adresses (A1, A2, A3) du même côté de mémoire, s'il s'agit d'adresses incrémentées (A0, A0+1, A0+2) et/ou s'il s'agit des mêmes adresses, et dans un tel cas, on réduit le nombre d'états d'attente nécessaires par rapport aux autres cas.

6. Procédé selon l'une des revendications précédentes,
selon lequel
un comparateur d'adresses (AC) compare une adresse appliquée (RAM, EX+1, EX+2) à une adresse appliquée précédemment, à un instant antérieur, notamment directement, pour déterminer si l'adresse appliquée instantanément est associée à une installation de mémoire (RAM) sans état d'attente nécessaire et si l'adresse précédente et l'adresses suivante (EX , EX +1) sont des adresses associées à une installation de mémoire ((FLASH/ROM) avec des états d'attente nécessaires, et
dans un tel cas, le nombre des états d'attente nécessaires par rapport à ceux des autres cas est réduit, notamment le nombre des états d'attente pour un accès de mémoire avec des états d'attente nécessaires est réduits, si les accès de mémoire à l'installation de mémoire avec les états d'attente nécessaires concernent des adresses incrémentées, les mêmes adresses ou des adresses d'un côté de la mémoire.

7. Procédé selon la revendication 6,
selon lequel
une installation de commande de mémoire (aMC) génère dans le cycle de l'accès de mémoire à l'installation de mémoire (RAM), d'elle-même une autre adresse (E X+1) et la fournit à l'installation de mémoire externe.

8. Procédé selon l'une des revendications précédentes,
selon lequel
dans le cas de cycles internes de l'installation de commande centrale (CPU), on effectue les accès de mémoire à une adresse (A0) à utiliser ultérieurement mais déjà appliquée, indépendamment de l'installation de commande centrale (CPU), transmettre les données correspondantes sans états d'attente pour après la fin du cycle interne.

9. Procédé selon l'une des revendications précédentes,
selon lequel
la largeur du bus (DB) vers l'installation de mémoire est plus grande que la largeur des données de l'installation de mémoire, données requises par l'installation de commande centrale et dans ce cas, le nombre des états d'attente est réduit en fonction d'une transmission de données cadencée plus étroitement.

10. Procédé selon la revendication 9,
selon lequel
une installation de pompe (BR) entre le bus de données (DB) et l'installation de mémoire (MODULE ENTREE/SORTIE) reçoit les adresses successives (A0, A0+2, A2+4) à appliquer, dont des adresses intermédiaires autorisées ont été éléminées, et en plus une signalisation (octet d'adresse byte-adr) pour adresser les adresses écartées.

11. Procédé selon l'une des revendications précédentes,
selon lequel
en cas d'un accès de mémoire à une installation de mémoire avec différents plans de types d'accès de côté et/ou de salve, auxquels sont associés différents côtés d'accès, on fixe les différents accès de mémoire selon les états d'attente nécessaires au maximum.

12. Procédé selon l'une des revendications précédentes,
selon lequel en cas d'accès de mémoire à un côté ouvert, on réduit le nombre des états d'attente par comparaison à l'accès à un côté non ouvert.

13. Procédé selon l'une des revendications précédentes,
selon lequel
pour déterminer le nombre des états d'attente nécessaires, on mémorise les propriétés des installations de mémoire à accéder et/ou les adresses accédées avec les états d'attente nécessaires, respectivement associés, dans une installation de mémoire (M) d'une installation de commande de mémoire (aMC) pour exécuter le procédé.

14. Dispositif (aMC) pour commander un accès de mémoire comprenant
- un premier branchement vers une installation de commande centrale (CPU) pour transmettre des premières données et/ou des signaux (status, wait),
- un second branchement (AB) pour transmettre des secondes données ou des signaux (adr) ainsi qu'une installation de mémoire à accéder (FLASH / ROM, RAM, MODULE ENTREE/ SORTIE) et
- une installation de commande pour commander l'accès de mémoire à l'installation de mémoire et pour fixer des états d'attente pour l'installation de commande centrale (CPU),
**caractérisé en ce que** l'installation de commande (aMC ; AD, AC, MD, CL, WC, BC) est conçue pour analyser les premières données (status) concernant l'état instantané de l'installation de commande centrale (CPU) et les secondes données (adr) concernant le type et l'adresse (adr) de l'installation de mémoire vers laquelle doit se faire l'accès de mémoire,
et pour fixer les états d'attente correspondants et signaler (wait) les états d'attente à l'installation de commande centrale (CPU).

15. Dispositif selon la revendication 14 comportant une installation de mémoire (M) ou un branchement à une installation de mémoire pour enregistrer les états d'attente associés aux adresses et/ou aux installations de mémoire et auxquels on peut avoir un tel accès de mémoire.

16. Dispositif selon la revendication 14 ou 15 comportant un compteur d'états d'attente (WC) pour compter jusqu'à une valeur limite (limit) correspondant à l'accès de mémoire requis, et une logique de configuration (CL) pour signaler un signal d'état d'attente (wait) en fonction de ce que le compteur d'états d'attente (WC) atteint la valeur limite (limit) et indépendamment de l'analyse d'une adresse d'accès.
